# EUROPÄISCHE PATENTSCHRIFT

(11) **EP 1 194 240 B1**
(45) Veröffentlichungstag und Bekanntmachung des Hinweises auf die Patenterteilung: **23.07.2008**
(21) Anmeldenummer: 00952995.9
(22) Anmeldetag: 04.07.2000
(51) Int. Cl.: B01L 3/02

(54) **EINRICHTUNG ZUM HANDHABEN VON FLÜSSIGKEITSPROBEN UND HERSTELLUNGSVERFAHREN SOWIE SYSTEM ZUM HANDHABEN VON FLÜSSIGKEITSPROBEN**
DEVICE FOR HANDLING LIQUID SAMPLES, PRODUCTION METHOD FOR SAID DEVICE AND SYSTEM FOR HANDLING LIQUID SAMPLES
DISPOSITIF POUR LA MANIPULATION D'ECHANTILLONS DE LIQUIDE, SON PROCEDE DE PRODUCTION ET SYSTEME DE MANIPULATION D'ECHANTILLONS DE LIQUIDE

(30) Priorität: 15.07.1999 DE 19933458
(43) Veröffentlichungstag der Anmeldung: 10.04.2002
(73) Patentinhaber: EPPENDORF AG, 22339 Hamburg (DE)
(72) Erfinder: HUSAR, Dieter, D-22397 Hamburg (DE)
(74) Vertreter: Hauck Patent- und Rechtsanwälte
(86) Internationale Anmeldenummer: PCT/EP2000/006213
(87) Internationale Veröffentlichungsnummer: WO 2001/005505

(56) Entgegenhaltungen:
- WO-A-97/04297
- WO-A-99/36176
- WO-A-99/36765
- DE-U- 29 916 471
- US-A- 4 007 010
- US-A- 4 237 095
- US-A- 5 571 410

## Beschreibung

Die Erfindung bezieht sich auf eine Einrichtung zum Handhaben von Flüssigkeitsproben, auf ein System zum Handhaben von Flüssigkeitsproben und auf ein Verfahren zum Herstellen der Einrichtung.

Das Handhaben von Flüssigkeitsproben oder "Probenhandling" umfaßt insbesondere das Dosieren (u. a. Pipettieren, Dispensieren, Beladen von Mikrotiterplatten und Gel-Elektrophoreseplatten), Transportieren, Zentrifugieren, Temperieren und Mischen, den Proben-(speziell: Zell-)Abschluß, die Reinigung, Filtration und Konzentrierung, das Reagieren von Proben und/oder Reagenzien und das (speziell: fluorimetrische und photometrische) Messen von Proben.

Von der Anmelderin ist ein System zum Handhaben von Flüssigkeitsproben bekannt, daß aus einer Vielzahl verschiedener Disposables (Einmalartikel, die nach ein- oder mehrmaligen Gebrauch weggeworfen werden) und Geräten besteht. Dieses System wird als "Mikrotitersystem" bezeichnet, da die Probenaufnahmen der Disposables Volumina im Bereich von einigen Zehntel bis einigen Tausend Mikroliter haben. Es umfaßt die Bereiche:
- Dosieren von Volumina zwischen 0,2 und 5000 Mikroliter mittels Pipettenspitzen oder Spritzen zusammen mit entsprechenden Dosiergeräten,
- Probentransport, Zentrifugation, Temperieren und Mischen mittels Reaktionsgefäßen für Volumina von 0,2 bis 2,0 ml zusammen mit entsprechenden Geräten,
- Meßtechnik insbesondere auf der Basis von Küvetten und Fluorimetern, Luminometern und Photometem und
- Zellmanipulation (z. B. Zellfusion, Zellporation und Zellpositionierung) insbesondere auf der Basis von Küvetten.

Im medizinischen, biologischen oder chemischen Labor werden jedoch in allen Bereichen mit zunehmender Tendenz immer kleinere Volumina bzw. höhere räumliche Dichtungen der Volumina eingesetzt. Seit Ende der 80-er Jahre hat sich vor allem in der immunologischen Analytik anstelle der Verwendung einzelner Reaktionsgefäße die Mikrotiterplatte durchgesetzt, die eine Vielzahl von Probenaufnahmen in Form von Vertiefungen umfaßt, die in Reihen nebeneinander angeordnet sind. Dies hat zur Weiterentwicklung vorhandener Dosiersysteme (z. B. der Mikroliterpipette) zu Mehrkanal-Dosiersystemen geführt.

Anfänglich wurden Mikrotiterplatten mit 96 Aufnahmen ("wells") im 9-mm-Raster verwendet. Heute verlangen insbesondere die Verfahren zur DNA-Vervielfältigung (PCR) und DNA-Analyse immer häufiger eine hochgradig parallele Bearbeitung einer großen Anzahl von Proben. So sind Mitte der 90-er Jahre entsprechend Mikrotiterplatten mit 384 Aufnahmen im 4,5 mm-Rastermaß bekannt geworden. Inzwischen gibt es bereits Mikrotiterplatten mit 1.536 Aufnahmen im 2,25 mm-Rastermaß. Diese und weitere räumliche Verdichtungen der Probenaufnahmen dürften sich immer mehr durchsetzen.

Die Entwicklung der Dosier- und Gefäßsysteme hat jedoch mit vorstehender Entwicklung nicht Schritt gehalten. Mittels Mehrkanal-Pipettiervorrichtungen, die mit einer Vielzahl Pipettenspitzen arbeiten, kann der Verdichtung von Aufnahmen in Mikrotiterplatten nur eingeschränkt Rechnung getragen werden.

Die Herstellung von "Gel-Loadern" basiert ebenfalls auf Pipettenspitzen. Beispielsweise werden Pipettenspitzen in einem aufwendigen zweiten Arbeitsgang zu einer dünnen Gel-Loaderspitze ausgezogen oder auf eine Dicke von 0,2 bis 0,4 mm platt gepreßt, damit sie in den engen Raum zwischen Gel-Elektrophoreseplatten eingeführt werden können. Diese Technologien lassen eine hochgradige Parallelisierung nicht zu und eröffnen keine Möglichkeit zur Reduktion der Abmaße im Hinblick auf eine Verringerung des Rastermaßes bei Gelen.

Aus der WO-A-97 04 297 ist ein System zum Handhaben von Flüssigkeitsproben bekannt. Dieses umfasst mindestens eine Einrichtung zum Handhaben von Flüssigkeitsproben mit mindestens zwei übereinander geschichteten und miteinander verbundenen, planaren Elementen, wobei zwischen den planaren Elementen eine Aufnahme für eine Flüssigkeitsprobe ausgebildet ist, die sich zwischen einer nach aussen führenden Mündung zum Abgeben von Flüssigkeitsprobe und einem nach aussen führenden Durchgang erstreckt. Das System umfasst ausserdem ein Handhabungsgerät mit einer Verdrängungs- bzw. Betätigungseinrichtung. Mit diesem Gerät kann die mindestens eine Einrichtung zum Handhaben der Flüssigkeitsprobe lösbar verbunden und dabei und so mit der Verdrängungs- bzw. Betätigungseinrichtung gekoppelt werden, dass mittels der Verdrängungs- bzw. Betätigungseinrichtung Flüssigkeitsproben aus der Mündung ausgestossen werden können.

Aus der DE 198 43 691 A1 ist ein Spitzenstreifen aus einer Anzahl aus miteinander verbundenen Pipettenspitzen bekannt, die im wesentlichen parallel ausgerichtet und nebeneinanderliegend angeordnet sind. Die Spitzen sind hohl, und jede Spitze besteht aus einem Spitzenkörper und einem abgeflachten abliegenden Ende. Die abgeflachten Enden sind im wesentlichen in einer Ebene koplanar angeordnet und gestatten damit das gleichzeitige Einführen der abgeflachten Enden zwischen dicht angeordneten Plattenflächen von Gel-Elektrophoreseplatten. Der räumlichen Verdichtung dieses Spitzenstreifens, der aus Kunststoff insbesondere durch Spritzgießen hergestellt werden soll, sind ebenfalls Grenzen gesetzt.

Auch die Technologie der Integration von Filterelementen in Dosier- und Gefäßsysteme ist technisch aufwendig und für eine weitere räumliche Verdichtung kaum geeignet. Diese Filterelemente können beispielsweise in Pipettenspitzen als Schutz vor Querkontamination durch Aerosole oder in Reaktionsgefäßen als Filtereinsätze oder in Membrangefäßen zur Bakterienanzucht oder Mikrodialyse dienen.

Bei Reaktionsgefäßen und Pipettenspitzen gibt es keine integrierte technische Lösung zur Vergrößerung der Reaktionsoberflächen. In der Regel behilft man sich mit dem Einsetzen von Kartuschen und "Säulen", die über Membranen oder Glasfritten mit dem Reaktionsvolumen korrespondieren.

Davon ausgehend liegt der Erfindung die Aufgabe zugrunde, ein System zum Handhaben von Flüssigkeitsproben und ein Verfahren zur Herstellung einer Einrichtung zum Handhaben von Flüssigkeitsproben insbesondere für Probenvolumina von etwa 0,001 Mikroliter und darüber zu schaffen. Dabei soll die Möglichkeit gegeben sein, solche Einrichtungen in sehr kurzen Abständen nebeneinander anzuordnen. Ferner sollen die Einrichtungen als Disposable ausführbar sein.

Die Aufgabe wird durch ein System gemäß Anspruch 1 bzw. Anspruch 2 gelöst.

Dadurch, daß die Einrichtungen im wesentlichen aus planaren, übereingeschichteten und miteinander verbundenen Elementen bestehen, sind Aufnahmen insbesondere im Volumenbereich von ca. 0,001 Mikroliter und darüber realisierbar Besonders interessant ist die Realisierung von Volumina im Bereich von 0,001 bis 20 Mikroliter. Die Volumina der erfindungsgemäßen Einrichtungen können aber auch im Bereich herkömmlicher Pipettenspitzen und Spritzen (bis etwa 5000 Mikroliter) oder Gefäße (bis etwa 2,0 ml) angesiedelt sein. Mehrere Einrichtungen können in sehr kurzen Abständen nebeneinander angeordnet werden, die dem Rastermaß neuentwickelter Mikrotiterplatten entsprechen. Dabei wird die räumliche Verdichtung bzw. Parallelisierung besonders dadurch begünstigt, daß mehrere Einrichtungen nebeneinander aus gemeinsamen planaren Elementen gebildet sein können und/oder mehrere übereinander aus mehreren übereinandergeschichteten planaren Elementen gebildet sein können. Für die planaren Elemente kommen als Materialien Plättchen, Folien oder Membranen aus Kunststoff und/oder Glas und/oder Halbleitermaterial und/oder Metall in Betracht, so daß die Einrichtungen verhältnismäßig kostengünstig und als Disposable herstellbar sind.

Die Einrichtungen lassen sich in verschiedener Weise zum Handhaben von Flüssigkeitsproben benutzen. So können sie zusammen mit einem entsprechenden Gerät zur Dosierung von Flüssigkeiten herangezogen werden, d. h. zur Aufnahme und Abgabe von definierten Flüssigkeitsmengen. Dazu gehört insbesondere das Pipettieren, Dispensieren und das Beladen von Mikrotiterplatten oder Gel-Elektrophoreseplatten, jeweils ein- oder mehrkanalig: Zusätzlich oder statt dessen können die Einrichtungen allein oder in Verbindung mit entsprechenden Geräten benutzt werden zum Transportieren, und/oder Zentrifugation und/oder Temperierung und/oder Mischung und/oder als Reaktionsbehältnis für flüssige Proben und/oder Reagenzien und/oder zur Messung flüssiger Proben und/oder Reagenzien.

Die Probenflüssigkeit und/oder Reagenzien können in jedem Fall mittels einer Verdrängungseinrichtung oder einer Betätigungseinrichtung aufgenommen und/oder abgegeben werden. Die Einrichtung zum Handhaben von Flüssigkeitsproben ist also analog einer Pipettenspitze oder Spritze mit Flüssigkeit befüllbar und/oder entleerbar.

Vorteilhafte Ausgestaltungen dieser Einrichtungen des Systems sind in den Unteransprüchen 3 bis 37 angegeben.

Mittels der beiden Systeme ist es möglich, Flüssigkeitsproben in die Einrichtung zum Handhaben von Flüssigkeitsproben aufzunehmen und aus dieser abzugeben. Dabei kann es sich um eine Dosierung handeln oder um einen Vorgang, der mindestens einem weiteren der oben erwähnten Handhabungsvorgänge (z. B. Mischen, Temperieren etc.) vorgeordnet und/oder nachgeordnet ist. Das System ermöglicht bei entsprechender Ausgestaltung des Handhabungsgeräts insbesondere die gleichzeitige parallele Aufnahme und Abgabe von Flüssigkeitsproben in oder aus einer Vielzahl nebeneinander und/oder übereinander angeordneter Einrichtungen, beispielsweise im Hinblick auf die Bearbeitung von Mikrotiterplatten.

Weitere vorteilhafte Ausgestaltungen dieser Systeme sind in den Unteransprüchen 38 bis 46 angegeben.

Gemäß Anspruch 47 umfaßt das System zum Handhaben von Flüssigkeitsproben ein Handhabungsgerät mit einem Zentrifugenrotor, der mindestens eine Einrichtung zum lösbaren Befestigen der mindestens einen Einrichtung zum Handhaben von Flüssigkeitsproben aufweist.

Mittels dieses Systems kann eine Probenflüssigkeit, die beispielsweise mittels eines Systems gemäß Anspruch 1 oder 2 in eine Einrichtung zum Handhaben von Flüssigkeitsproben gefiillt worden ist, ohne einen Umfüllvorgang direkt zentrifugiert werden. Auch ist die Einrichtung zum Handhaben besonders geeignet, mit der Aufnahme in Radialrichtung des Zentrifugators ausgerichtet zu werden, um günstige Zentrifugierbedingungen zu schaffen.

Ausgestaltungen dieses Systems sind in den Unteransprüchen 48 bis 50 angegeben.

Gemäß Anspruch 51 umfaßt das System zum Handhaben von Flüssigkeitsproben ein Handhabungsgerät mit einer Heizeinrichtung und mindestens einem dieser zugeordneten Lager, um eine Probenflüssigkeit in mindestens einer darauf gelagerten Einrichtung zum Handhaben zu erwärmen.

Mittels dieses Systems kann eine in einer Einrichtung zum Handhaben aufgenommene Probe ohne Umfüllvorgang temperiert werden, wobei besonders günstige Bedingungen für den Wärmeaustausch geschaffen werden können.

Eine weitere Ausgestaltung dieses Systems ist in Unteranspruch 52 angegeben.

Gemäß Anspruch 53 umfaßt das System zum Handhaben von Flüssigkeitsproben ein Handhabungsgerät mit einer optischen Meßeinrichtung und einer Einrichtung zum lösbaren Befestigen der Einrichtung zum Handhaben von Flüssigkeitsproben, wobei die Einrichtung zum Handhaben von Flüssigkeitsproben bei Anordnung in der Einrichtung zum lösbaren Befestigen mit ihrer Aufnahme im Strahlengang der optischen Meßeinrichtung angeordnet ist.

Mittels dieses Systems kann eine in eine Einrichtung zum Handhaben gefüllte Flüssigkeitsprobe ohne weiteres einer optischen Messung unterzogen werden. Bei der optischen Meßeinrichtung kann es sich um ein Fluorimeter, ein Photometer, ein Luminometer oder um eine andere Einrichtung zur Durchführung einer optischen, physiko-chemischen Meßmethode handeln. Durch geeignete Ausgestaltungen der Einrichtung zum Handhaben können besonders günstige Bedingungen für die optische Messung geschaffen werden.

Weitere mögliche Ausgestaltungen der vorher genannten Systeme sind in den Ansprüchen 54 bis 58 angegeben. Demnach können die Elemente eines oder mehrerer Handhabungsgeräte in oder an mindestens einem Chassis und/oder Gehäuse angeordnet sein. Insbesondere können mehrere Elemente verschiedener Handhabungsgeräte ein gemeinsames Chassis und/oder Gehäuse haben. Es können sogar sämtliche Elemente verschiedener Handhabungsgeräte einem gemeinsamen Chassis und/oder Gehäuse zugeordnet sein.

Ferner kann das mindestens eine Handhabungsgerät vollständig manuell betätigbar sein oder vollständig automatisch arbeiten. Es kann sich aber auch um ein nur teilweise automatisch arbeitendes Gerät handeln. Des weiteren ist es möglich, das mindestens eine Handhabungsgerät als Handgerät auszuführen, so daß es von einem Benutzer für die Anwendung in die Hand genommen werden kann.

Mehrere Handhabungsgerät können automatisch zusammenarbeiten. Für den Transport der Einrichtung zum Handhaben, aber auch zum Unterstützen der Handhabungsgeräte kann ein zusätzliches Handhabungsgerät vorhanden sein, das beispielsweise einen Robotorarm aufweisen kann.

Schließlich wird die Aufgabe gemäß Anspruch 59 gelöst durch ein Verfahren zum Herstellen einer Einrichtung zum Handhaben von Flüssigkeitsproben eines Systems nach einem der Ansprüche 1 bis 58, bei dem die Oberflächen der planaren Elemente strukturiert und mehrere planare Elemente in einander überdeckende Beziehung gebracht und miteinander verbunden werden und die verbundenen planaren Elemente senkrecht zur Hauptausdehnungsebene der planaren Elemente in einzelne Einrichtungen zum Handhaben von Flüssigkeitsproben zerlegt werden.

Dieser Herstellungsprozeß ermöglicht eine einfache und genaue Herstellung kleinster Einrichtungen zum Handhaben von Flüssigkeitsproben. Dabei ist eine sehr kostengünstige Herstellung möglich und eine Verwendung der Einrichtungen als Disposals wirtschaftlich. Erreichbar sind überdies bei bisherigen Einrichtungen zur Handhabung von Flüssigkeitsproben nicht realisierbare Maßnahmen zur Strukturierung der Flüssigkeitsaufnahme und ihrer Oberflächen sowie deren chemische Behandlung sowie deren Modifikation.

Ausgestaltungen des Verfahrens sind in Unteranspruch 60 angegeben.

Einige Vorteile der Erfindung sind:

Die Einrichtungen zum Handhaben von Flüssigkeitsproben sind wegen ihres planaren Aufbaues hochgradig zwei-dimensional parallelisierbar. Der Abstand zwischen den Einrichtungen kann extrem gering gewählt werden. Eine Vielzahl von Einrichtungen kann parallel nebeneinander angeordnet werden. Das ist insbesondere für eine Dosierung in hochverdichtete Mikrotiterplatten vorteilhaft.

Die Einrichtungen zum Handhaben benötigen wegen ihres planaren Aufbaus (bestehend beispielsweise aus strukturierten Kunststoff-/Glas/Plättchen oder Kunststoff-/Membran/Folien) nur eine sehr geringe Höhe. Dies ist besonders vorteilhaft bei Gel-Loadem. Es können auch Folien und/oder Membranen geringer Dicke verwendet werden, wenn eine Flexibilität der Einrichtungen zum Handhaben erwünscht ist. Geringe Baulängen sind erreichbar, insbesondere bei spezieller (z. B. mäanderförmiger) Gestaltung der Aufnahme.

Auch bei der Herstellung von Gel-Loadern aus planaren Elementen oder Folien ist erstmals eine hochgradige Parallelisierung möglich und sind gleichzeitig weitere Möglichkeiten zur Reduktion der Abmaße gegeben. Damit ist der Weg zur Verringerung des Rastermaßes bei der Gel-Elektrophorese frei.

Die Packungsdichte der Einrichtungen zum Handhaben kann gegenüber dem bekannten Mikrolitersystem stark gesteigert werden. Dies ist insbesondere vorteilhaft in Zentrifugen bzw. bei Anordnung der Einrichtungen zum Handhaben in mehrdimensionalen Arrays.

Aufgrund der Dünnwandigkeit der Einrichtungen zum Handhaben ist ein sehr schneller Wärmeübergang gewährleistet. Dies ist vorteilhaft für spezielle Anwendungen, beispielsweise in der PCR (polymerase chain reaction). Dort sind nämlich bei Einsatz der Einrichtungen zum Handhaben sehr schnelle Temperierzyklen erzielbar.

Die Abgeschlossenheit der Aufnahmen gegenüber der Umgebung verhindert jegliche Querkontamination. Dies gilt insbesondere für Ausführungen mit Filtermembranen und für die Version mit einer verlagerbaren Begrenzungswand.

Die Einrichtungen zum Handhaben sind aufgrund ihrer geringen Ausdehnung besonders geeignet, mit modifizierten Oberflächen insbesondere aus Kunststoff hergestellt zu werden, wobei aufgrund der planaren Geometrie insbesondere Oberflächenmodifikationen (auch Beschichtungen) vorteilhaft vorgenommen werden können.

Die Einrichtungen zum Handhaben können leicht mit Filtrationselementen (insbesondere Filtrationsmembranen) ausgerüstet werden, die leicht auf den planaren Geometrien angebracht werden können, beispielsweise durch Kaschierung.

Aufgrund der geringen Abmaße erlauben die Einrichtungen zum Handhaben auch einen weiteren Schritt in Richtung Integration und Miniaturisierung bei den Handhabungsgeräten.

Bei den Einrichtungen zum Handhaben für Dosierung bzw. Reaktion sind technische Lösungen zur Vergrößerung der Reaktionsoberflächen durch entsprechende Strukturierung der Aufnahmen integrierbar.

Die Miniaturisierung der Einrichtungen und der Systeme zum Handhaben ist für deren Konfektionierung (Bereitstellung) von großem Vorteil wegen des reduzierten Raumbedarfs.

Für die Automatisierbarkeit der Bereitstellung der Einrichtungen zum Handhaben in einem geeigneten Spendersystem ist deren planarer Aufbau besonders vorteilhaft.

Weitere Einzelheiten und Vorteile der Erfindung ergeben sich aus der nachfolgenden - nicht abschließenden - Beschreibung von Ausführungsmöglichkeiten, die sich zum Teil auf die anliegenden Zeichnungen beziehen. In den Zeichnungen zeigen:
Fig. 1 ein Dosier-Disposable in perspektivischem Sprengbild;
Fig. 2 Anschluß- und Fixierbereich eines Dosier-Disposables mit Membranfilter in perspektivischem Sprengbild;
Fig. 3a und b Mündungsabschnitt von Volumenteilen des Dosier-Disposables von Fig. 1 (Fig. 3a) und eines Dosier-Disposables mit düsenartiger Verjüngung (Fig. 3b) in perspektivischer Seitenansicht;
Fig. 4 Dosier-Disposable mit mehreren parallel nebeinander angeordneten Dosier-Disposables gemäß Fig. 1 in perspektivischem Sprengbild;
Fig. 5 ein planares Element eines weiteren Dosier-Disposable in perspektivischer Seitenansicht;
Fig. 6 Volumenteil eines Dosier-Disposables mit mehreren parallel nebeneinander angeordneten Volumenteilen gemäß Fig. 5 in perspektivischer Seitenansicht;
Fig. 7 mehrere übereinandergestapelte Dosier-Disposables entsprechend Fig. 5 in perspektivischer Seitenansicht;
Fig. 8 mehrere übereinandergestapelte Dosier-Disposables entsprechend Fig. 6 in grobschematischer perspektivischer Seitenansicht;
Fig. 9 Verbindung eines Dosier-Disposables mit einer Leitung zu einer Verdrängungseinrichtung;
Fig. 10 Zentrifugier-Disposable in einem grob schematischen Längsschnitt;
Fig. 11 Anordnung mehrerer Zentrifugier-Disposables gemäß Fig. 9 in einem Zentrifugenrotor;
Fig. 12 Zentrifugenrotor mit einer Aufnahme für ein Zentrifugier-Disposable in perspektivischer Seitenansicht;
Fig. 13 Strukturelemente für ein Disposable in perspektivischer Seitenansicht;
Fig. 14 Volumenteil eines Reaktions-Disposables in perspektivischer Seitenansicht;
Fig. 15 Volumenteil eines Gel-Disposables in perspektivischer Draufsicht;
Fig. 16 Dialyse-Dispsosable in perspektivischem Sprengbild;
Fig. 17 Volumenteil eines Zentriugier-/Filtrations-Disposables in perspektivischer Draufsicht;
Fig. 18 Küvetten-Disposable in perspektivischem Längsschnitt.

Bei der Erläuterung von Ausführungsmöglichkeiten werden die Einrichtungen zum Handhaben von Flüssigkeitsproben als "Disposable" bezeichnet, da diese vorteilhaft als Einmalartikel ausführbar sind. Ungeachtet dessen können mit denselben Merkmalen jedoch auch wiederverwendbare Artikel ausgeführt werden, so daß die nachfolgenden Ausführungen auch dafür Gültigkeit haben.

### 1. Grundlegende Ausführungsmöglichkeiten der Erfindung

Diese können Disposables zum Aufnehmen und/oder Abgeben (insbesondere Dosieren) von Flüssigkeiten sein. Ferner können sie Handhabungsgeräte für Disposables umfassen insbesondere zur Aufnahme und Abgabe (insbesondere Dosierung) von Flüssigkeitsmengen.

Ferner kann es sich um Disposables für andere Arten des Probenhandling handeln. Probenhandling kann sein: Transport, Zentrifugation, Temperierung und Mischung.

Außerdem kann das Disposable als Reaktionsbehältnis für flüssige Proben und/oder Reagenzien dienen. Sämtliche Handhabungen sind in einem einzigen Disposable durchführbar. Dazu können manuelle bzw. automatisierte Handhabungsgeräte insbesondere zur Zentrifugation, Temperierung (insbesondere auch für PCR) oder Mischung gehören.

Des weiteren sind Disposables zur Messung flüssiger Proben und/oder Reagenzien möglich sowie zugehörige Handhabungsgeräte zur optischen Messung.

Des weiteren sind Disposables mit integrierten Filtrationselementen beliebiger Art möglich, z. B. hydrophobe Aerosolbarrieren (analog zu der derzeit üblichen Filtern aus gesintertem PE oder PP), hydrophobe Filter zur Be- und Entlüftung (für Bakterienanzuchtgefäße) oder Membranen zur Mikrodialyse.

Ferner sind Disposables mit integrierten Strukturen zur geometrischen Vergrößerung von reaktiven Oberflächen möglich.

Sämtliche Disposables umfassen zwei oder mehrere planare Elemente. Diese können insbesondere Kunststoff-, Glas- oder Siliziumplättchen, Folien oder Membranen sein.

Die Funktion dieser planaren Elemente entspricht der Zielsetzung des jeweiligen Disposables, beispielsweise durch innere Strukturierung der einzelnen planaren Elemente (z. B. mit Fluidkanälen, Mischer-Strukturen, Oberflächenvergrößerungen).

Ferner in Betracht kommt die Oberflächenmodifikation in definierten Funktionsbereichen (z. B. zur aktiven/reaktiven oder passiven Oberflächenfunktionalisierung; Aminogruppen, Karboxylgruppen, Streptavidin, immobilisierte Enzyme, Oligos, Hydrophilisierung, Hydrophobisierung, Galvanisierung).

Darüber hinaus ist die Verbindung mit zusätzlichen Funktionselementen möglich. Dazu gehören beispielsweise Membranen, Faservliese, optische Fenster, Belüftungsfilter und Elektroden.

Die äußere Geometrie kann im Hinblick auf die jeweilige Anwendung gewählt werden (beispielsweise für Gel-Loader eine kleine, flache Spitze).

### 2. Herstellungsprozeß

Dadurch, daß die Strukturen auf planaren Elementen realisiert werden, ist (analog zur Herstellung von Komponenten in der Halbleiterindustrie und Mikrosystemtechnik) die parallele Bearbeitung einer großen Anzahl von Disposables auf einer Platte (analog den Wafem in der Halbleiterindustrie oder Mikrosystemtechnik) oder einem anderen planaren Element möglich.

Die Herstellung der Disposables kann in mehreren Schritten erfolgen:

Zunächst kann die Strukturierung der Oberflächen der planaren Elemente erfolgen.

Gegebenenfalls können danach ein oder werden mehrere Oberflächenbehandlungsschritte zur funktionellen Modifikation der Oberflächen der planaren Elemente in definierten Bereichen durchgerührt werden.

Danach können zwei oder mehrere planare Elemente miteinander verbunden werden (z. B. durch Kaschieren oder Bonden).

Schließlich ist eine Vereinzelung von Disposables möglich, falls gewünscht.

### 3. Herstellungstechnologien

Die Herstellung kann weitgehend auf der Grundlage bekannter Technologien erfolgen.

Zur Strukturierung der Oberflächen eignen sich viele Verfahren, z. B.:
- (Heiß)prägen oder Spritzguß für planares Kunststoffmaterial (z. B. Plättchen und Folien)
- Laser- oder Wasserstrahlschnitt in Folien aus Kunststoff (insbesondere für kleine Serien)
- mikromechanische Bearbeitung (insbesondere für kleine Stückzahlen)
- Ätztechnik (naß oder trocken) für Glas und Silizium.

Die Modifikation von Oberflächen kann beispielsweise mittels chemischer Oberflächenbehandlung (z. B. Polymer-Grafting, Ätztechniken, galvanische Verfahren), mittels Plasmaverfahren (z. B. Coronabehandlung) oder Plasmabeschichtungsverfahren oder mittels CVD (chemical vapour deposition) oder PVD (physical vapour deposition) erfolgen.

Als Verbindungstechnologien können je nach Materialkombination beispielsweise die Verklebung (z. B. Kaschieren mit Folien), die Ultraschallverschweißung, das Reibschweißen und die Verbindung mittels Wärmeverfahren (z. B. Bond-Prozesse) eingesetzt werden.

Die Vereinzelung und/oder Formung der Außenkontur von Disposables kann z. B. durch Schneiden (z. B. Diamantsägen wie in der Siliziumtechnik bekannt, Laser-oder Wasserstrahl-Schnittverfahren) oder durch Stanzprozesse erfolgen.

### 4. Schnittstelle Disposable-Handhabungsgerät

Es ist möglich, mittels ein- und desselben Disposables zwei oder mehrere Schritte des Probenhandlings durchzuführen. Dazu gehören insbesondere Dosieren, Zentrifugieren, Filtrieren, Temperieren, Mischen, Reagieren, Messen, Analysieren, Zellmanipulation (z. B. Zellporation, Zellfusion, Zellpositionierung) usw.

Nachfolgend werden einige Einzelheiten von Disposables und Handhabungsgeräten zur Durchführung verschiedener Handlingschritte erläutert. Diese Einzelheiten können auch mehr oder weniger kumuliert an ein und demselben Disposable oder Handhabungsgerät vorkommen.

### a) Dosier-Disposables

Zur Kontaktierung kann das planare Disposable in ein Handhabungsgerät einschiebbar sein. Hierbei kann eine abgedichtete Kontaktierung des Durchgangs des Disposables mit dem Gerät erfolgen. Dabei kann eine gleitfähige Dichtfläche und/oder ein O-Ring zur Wirkung kommen. Ferner kann die Kontaktierung von einem Andruckelement unterstützt werden, wobei es sich um eine Feder, eine Einführungsschräge o. ä. handeln kann.

Nachdem der abgedichtete Kontakt hergestellt ist, kann durch Verstellen einer Luftsäule mittels einer Verdrängungseinrichtung - analog dem Pipettierprozeß einer Luftpolsterpipette - die Dosierung gesteuert werden. Der gewünschte Druckverlauf kann über ein Kolben-Zylindersystem (analog den Kolbenhubpipetten) erzeugt werden oder mittels miniaturisierter Pumpen (die heute in Silizium- und/oder Kunststofftechnologie bereits entwickelt sind).

Die Möglichkeiten der Mikrostrukturierung erlauben es, daß Totvolumen im Disposable und im Handhabungsgerät, d. h. das Volumen der Luftsäule, im Interesse eines möglichst geringen Volumenfehlers und einer hohen Präzision der Dosierung sehr gering zu halten. Dies erlaubt ein Pipettieren und Dispensieren mit einer Sorte Disposable.

Bei Disposables mit einer verlagerbaren Begrenzungswand muß die Kontaktierung mit dem Handhabungsgerät die Verbindung einer Betätigungseinrichtung mit der Begrenzungswand sicherstellen, um diese verlagern zu können. Dabei ist die direkte Einwirkung eines Betätigungsmechanismus auf die Begrenzungswand möglich. Möglich ist aber auch eine hydraulische Betätigung, eine magnetische Betätigung o. ä..

Bei sämtlichen Disposables kann zur Kompensation störender Kapillarkräfte eine Hydrophilisierung oder Hydrophobisierung der Oberfläche vorgenommen werden.

### b) Zentrifugier-/Filtrations-Disposables

Planare Disposables zum Zentrifugieren können in einer Zentrifuge ähnlich angeordnet werden, wie die Probenröhrchen in einer Hämatokrit-Zentrifuge. Die Gefäßabdichtung ist insbesondere mittels einer Abdeckung (z. B. Platte oder Folie) auf dem Disposable oder in der Zentrifuge selbst realisierbar. Es ist denkbar, die Zentrifugier-Disposables auch als Dosier- und/oder Filtrations-Disposables auszugestalten. Auch der Ort der Pellet-Position läßt sich in einem solchen Disposable besser als in einem konventionellen Reaktionsgefäß definieren.

### c) Temperier-/PCR-Disposables

Die Funktionen Dosieren und Temperieren können vorteilhaft mit einem Typ Disposable verwirklicht werden, insbesondere im Hinblick auf die Durchführung des PCR-Prozesses und die einhergehenden zyklischen Temperaturwechsel.

Die Kontaktierung zu einer wärmeleitenden Fläche (vorzugsweise mit höherer Wärmekapazität), die verschiedene einstellbare Temperaturen annehmen kann (auch im zyklischen Wechsel) kann vorteilhafterweise bei den planaren Disposables über eine Abdeckfolie mit geringer Dicke erfolgen. Diese ist mit einer Dicke von wenigen µm zu einigen 100 µm für einen optimalen Wärmeübergang ideal geeignet. Für die Abdeckfolie kann zudem unabhängig vom Material des planaren Elements, das das Volumen der Aufnahme bildet, ein besonders wärmeleitfähiges Material ausgewählt werden.

Planare Disposables ermöglichen zudem eine nahezu beliebige Volumenreduzierung des Proben- bzw. Reaktionsvolumens durch Verminderung der Tiefe der Aufnahme. Hierdurch hat die aufgenommene Probenmenge eine nur geringe Wärmekapazität, wodurch es möglich ist, kurze Aufheiz- und Abkühlzeiten zu erreichen, was insbesondere bei der PCR zur Reduzierung der Zykluszeit sehr vorteilhaft ist.

Das Volumen der Aufnahme kann insbesondere über die Ausprägung ihrer Tiefe in einem planaren Element eingestellt werden. Dies ist besonders vorteilhaft, weil die Reduktion der Tiefe praktisch beliebig möglich ist.

Die Integration von Probenaufnahme, Bereitstellung der Reagenzien (Enzyme und Primer) und der eigentliche PCR-Prozeß ist in einem einzigen planaren Disposable erzielbar. Dieses eröffnet gleichzeitig die Möglichkeit, die Reaktionschemie zu integrieren und für einen (ggf. beidseitig) dünnwandigen Reaktionsraum zu sorgen (noch weitergehender als bei Tiefziehfolien), um schnellere Temperaturzyklen zu erzielen.

### d) Analytik-Disposables

Mittels eines planaren Disposables ist die Integration von Probenaufnahme, Reaktion und Analyse (Messung und Auswertung) durchführbar. Auch die heute geforderte Mehrkanaligkeit kann einfach realisiert werden.

Die planare Anordnung begünstigt den Einsatz in der ATR (Attenuated Total Reflection)-Photometrie und in der IR-Spektroskopie. Auch für die UV-Spektroskopie können mittels des planaren Aufbaus und der bekannten PFA-Folien mit einer Dicke von weniger als 100 µm geeignete UV-transparente Küvetten geschaffen werden.

Auch bei der Detektion von Fluoreszenz- und Lumineszenz-Signalen ist die Dünnwandigkeit eines planaren Disposables vorteilhaft. Kunststoffe mit niedriger Eigenfluoreszenz sind bekannt.

### e) Bakterienanzucht-/Mikrodialyse-Disposables

Die planaren Disposables ermöglichen eine Integration der Probenaufnahme und der Bakterienanzucht oder Mikrodialyse. Durch das hohe Oberflächen/Volumen-Verhältnis ist ein sehr effektiver Gasaustausch zur Belüftung bzw. eine sehr effektive Dialyse möglich.

Mit Sterilmembranen (handelsüblich: 0,25 µm und 0,45 µm Porengröße) oder mit hydrophoben Belüftungsmembranen (z. B. Goretex®) kaschierte planare Disposables können beispielsweise als Bakterienanzuchtgefäße verwendet werden.

### f) Zellmanipulaltions-Disposables

Mittels des planaren Disposables ist die Integration von Probenaufnahme und Zellmanipulation (z. B. Zellporation (Elektroporation), Zellfusion oder Zellpositionierung) möglich. Auch weitere Bearbeitungsschritte sind integrierbar. Die Anordnung ermöglicht die leichte Integration von Bewegungs-und Porationselektroden zur Vereinzelung der Zellen und Zellporation.

Durch galvanische Methoden oder durch Aufdampfprozesse ist es möglich, das Disposable (analog einer Elektroporationsküvette) mit Elektroden (z. B. Aluminium, Gold) zu versehen. Hierbei kann der Elektrodenabstand in hohem Maß frei gewählt werden. Die durch Elektroporation behandelten Zellen können nach dem Vorgang mit dem Disposable wieder abgegeben werden, das zugleich ein Dosier-Disposable sein kann. Das Umfüllen über Pipettenspitzen in die Elektroporationsküvette und zurück entfällt.

Spiralförmige Elektrodenstrukturen, die zur Zellfusion verwendet werden, können durch planare mäanderförmige oder kammförmige Elektrodenstrukturen auf dem planaren Disposable ersetzt werden.

### 5. Figurenbeschreibung

Einzelheiten vorstehender und weiterer Ausführungsmöglichkeiten werden anhand der Zeichnungen von Ausführungsbeispielen erläutert. Soweit für Merkmale verschiedener Ausführungsbeispiele identische Bezugsziffern verwendet worden sind, hat die zugehörige Beschreibung für sämtliche betroffenen Ausführungsbeispiele Gültigkeit. Dies gilt auch für übereinstimmende Bezugsziffern, die mit einem oder mehreren Anstrichen versehen sind, wobei durch eine unterschiedliche Anzahl Anstrichen Unterschiede gekennzeichnet sind, die in der Figurenbeschreibung näher erläutert sind.

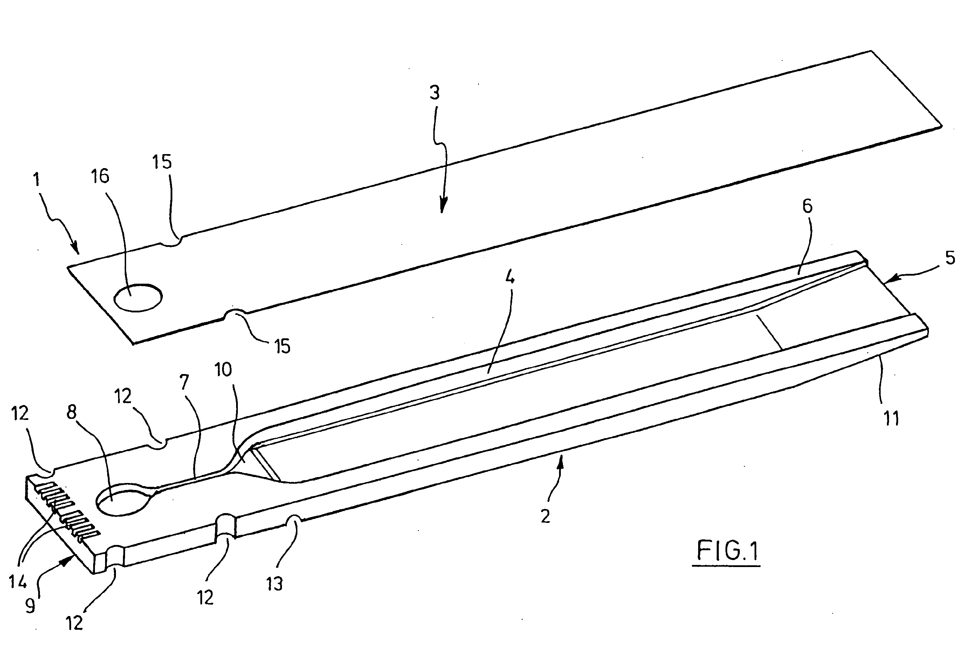

Die Fig. 1 zeigt eine Ausführungsvariante eines einzelnen Dosier-Disposables 1, das aus zwei übereinandergeschichteten planaren Elementen 2, 3 besteht, die eine längliche oder Zungenform haben.

Das planare Element 2 kann auch als "Volumenteil" bezeichnet werden, da darin die Aufnahme 4 für eine Flüssigkeitsprobe ausgebildet ist, die die Form eines breiten Kanals hat, der sich in Längsrichtung des planaren Elements 2 erstreckt. Die Aufnahme 4 hat eine Mündung 5 an einer schmalen Endseite des planaren Elements 2. Zur Mündung 5 hin verringert sich in einem Düsenabschnitt 6 allmählich die Tiefe der kanalförmigen Aufnahme 4. Der Düsenabschnitt 6 erstreckt sich etwa über ein Viertel der Gesamtlänge des breiten Abschnitts der Aufnahme 4.

Am anderen Ende ist die Aufnahme 4 über einen Kanal 7 mit erheblich geringerem Querschnitt mit einer kleinen, napfförmigen Nebenaufnahme 8 verbunden. Diese ist in der Nähe der Endseite 9 angeordnet, die sich gegenüber der Endseite mit der Mündung 5 befindet.

Die Aufnahme 4 geht über einen sich verjüngenden und ansteigenden Übergangsbereich 10 in den Kanal 7 über, der schmaler ist und eine deutlich geringere Tiefe hat. Die Nebenaufnahme 8 hat dieselbe verringerte Tiefe wie der Kanal 7.

Alle Kanten der Probenaufnahme 4, des Kanals 7 und der Nebenaufnahme 8 sind verrundet, um das Anhaften von Flüssigkeit ("Restfeuchte") zu minimieren. Hydrophile Kunststoffe oder Materialien des planaren Elements können zur Verminderung der Anhaftung hydrophobisiert werden, oder umgekehrt können hydrophobe Kunststoff hydrophylisiert werden.

In den schmalen Längsseiten hat das planare Element in der Nähe der Endseite 9 jeweils zwei halbzylindrische Ausnehmungen 12, die als Positionierelemente dienen, d. h. als Hilfen für eine genaue Ausrichtung des planaren Elements 2 in einem Handhabungsgerät.

In der unteren, breiten Längsseite hat das planare Element 2 eine weitere halbzylindrische Ausnehmung 13, die zur Verrastung mit einem Handhabungsgerät dient.

Unmittelbar angrenzend an die Endseite 9 hat das planare Element 2 auf der oberen, breiten Längsseite eine Codierung 14 in Form einer bestimmten Anordnung von Vertiefungen, Erhebungen, Löchern, Magnetisierungen, elektrischer Leitflächen oder dgl., die von einer Abtasteinrichtung eines Handhabungsgeräts abgetastet werden können, um den Typ des Disposables zu ermitteln.

Das Volumenteil 2 kann vorzugsweise als Präge- oder Spritzguß-Teil hergestellt werden, insbesondere aus einem transparenten Kunststoff. Die Dicke beträgt typischerweise 0,2 bis 1,0 mm. Dieses Teil eignet sich aufgrund seiner planaren Struktur auch ausgezeichnet zur Beschichtung (z. B. mit reaktiven Gruppen - COOH, -N₄, Hydrophobisierung, Hydrophilisierung). Die Tiefe der Kanäle liegt typischerweise unter 0,1 mm.

Das planare Element 3 ist eine dünne Abdeckfolie, die ebenfalls transparent sein kann. Die Foliendicke kann typischerweise 50 bis 200 µm betragen.

Die Abdeckfolie 3 kann über die oben erwähnten Verbindungstechnologien mit dem planaren Element 2 verbunden werden. Dann verschließt sie die Aufnahme 4 und den Kanal 7. Die Abdeckfolie 3 hat im Randbereich halbkreisförmige Aussparungen 15, die mit zwei Ausnehmungen 12 des planaren Elements 2 zur Deckung kommen.

Die Codierung 14 wird von der Abdeckfolie 3 nicht abgedeckt, um den Abfragekontakt einer Abtasteinrichtung zu gestatten. Ferner hat die Abdeckfolie 3 einen Durchgang 16, der genau über der Nebenaufnahme 8 angeordnet ist.

Über den Durchgang 16 kann somit eine Verdrängungseinrichtung eines Handhabungsgeräts mit dem Dosier-Disposable 1 verbunden werden. Ein an dem Durch-gang 16 angelegter Unterdruck bzw. Überdruck dient zum Einsaugen von Probenflüssigkeit in die bzw. zum Herausstoßen derselben aus der Aufnahme 4.

Damit keine unerwünschten Dosiereffekte eintreten, sind die planaren Elemente 2, 3, insbesondere die Abdeckfolie 3, vorzugsweise aus einem sehr steifen Material gewählt.

Im Zusammenhang mit dispensierenden Disposables kann aber bewußt auch eine sehr elastische Folie (ohne Durchgang 16) Verwendung finden, bei der die Dosierung durch definiertes Komprimieren des eingeschlossenen Volumens beispielsweise mit einem entsprechend geformten Stempel, d. h. mittels Direktverdrängung ("positive displacement") erfolgt (in der Fig. 1 nicht dargestellt).

Das abgebildete Disposable hat ungefähr die Dimensionen: Breite 2,25 mm, Höhe 0,5 mm, Länge 15 mm. Das Volumen der Aufnahme 4 beträgt etwa 5 Mikroliter.

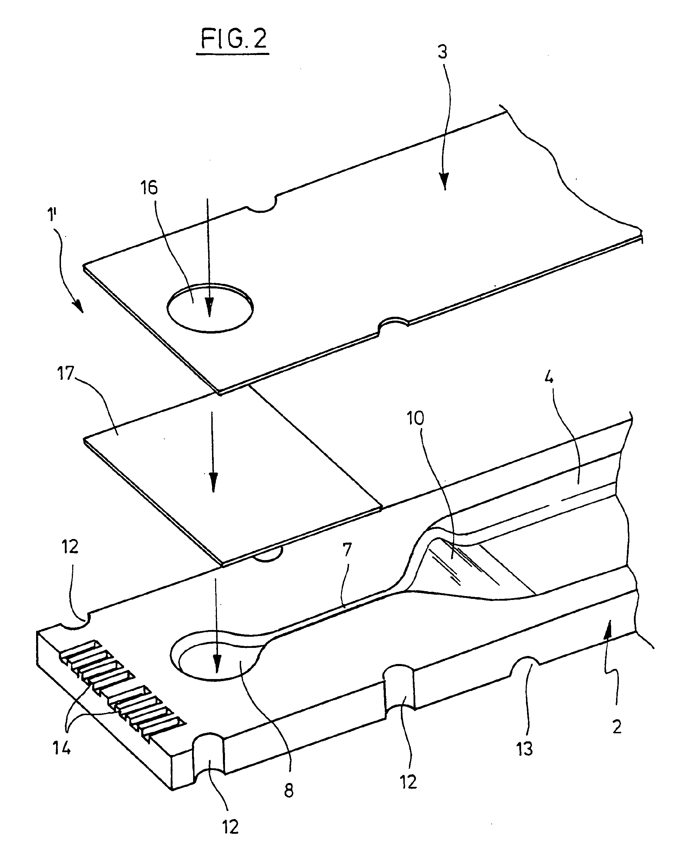

Fig. 2 zeigt einen Bereich eines weiteren Dosier-Disposables 1', das im einzigen Unterschied zum Dosierdisposable 1 von Fig. 1 ein zusätzliches planares Element 17 in Form einer Membranfolie aufweist, die zwischen dem Durchgang 16 und der Nebenaufnahme 8 angeordnet ist. Bei der Membranfolie 17 kann es sich um eine zur Sterilfiltration gebräuchliche Membran beispielsweise mit 0,2 µm oder 0,45 µm Porengröße handeln. Die Membranfolie 17 dient der Filterung der Ansaugluft, um eine Kontamination des an den Durchgang 16 anzuschließenden Handhabungsgeräts zu vermeiden. Die Membranfolie 17 soll den Durchgangsbereich der Ansaugluft überdecken, so daß es ausreicht, wenn sie etwas über den Rand des Durchgangs 16 bzw. der Nebenaufnahme 8 übersteht. Im Beispiel ist sie etwa quadratisch, wobei ihre Breite der Breite der Abdeckfolie 3 entspricht.

Die Dicke der Membranfolie 17 kann typischerweise 0,01 bis 0,1 mm betragen. Für dickere Membranfolien oder Filtervliese kann das planare Element 2 eine Vertiefung aufweisen (in der Fig. 2 nicht ausgeführt).

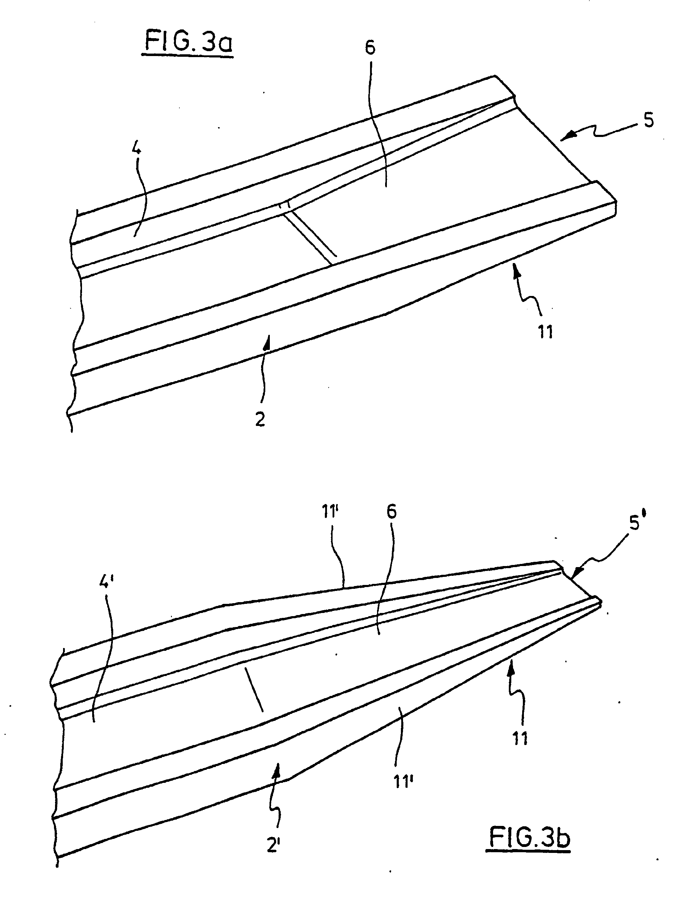

Fig. 3a und b zeigen Varianten des Mündungsbereichs von Dosier-Disposables. Dargestellt sind nur die Volumenteile 2, 2' ohne Abdeckfolie.

Gemäß Fig. 3a hat das planare Element 2 eine Aufnahme 4, deren Tiefe sich im Düsenabschnitt 6 bis auf 0,1 mm an der Mündung verringert. Bei dieser Ausgestaltung der Mündung 5 kann ein verhältnismäßig breiter Strahl abgegeben werden.

Gemäß Fig. 3b verringert sich jedoch nicht nur die Tiefe, sondern auch die Breite der Aufnahme 4' im Düsenbereich 6 zur Mündung 5' hin, und zwar mit einem Winkel von maximal 7 bis 8° (siehe Theorie des Diffusors). Hierdurch wird ein stark beschleunigter Strahl mit geringer Breite erreicht. Darüber hinaus weist das planare Element 2' nicht nur an der unteren, breiten Längsseite eine Anschrägung 11 auf, sondern weitere Anschrägungen 11' an den schmalen Längsseiten, so daß es insgesamt zur Mündung 5' hin zugespitzt ist. Dies kann z. B. für Gel-Loader oder für die Aufnahme aus bzw. die Abgabe in Mikrotiterplatten (vor allem in Parallelanordnung) sinnvoll sein.

Die Zuspitzung des Dosier-Disposables kann mittels bekannter Herstellungstechnologien erfolgen, z. B. durch Schneiden oder Stanzen.

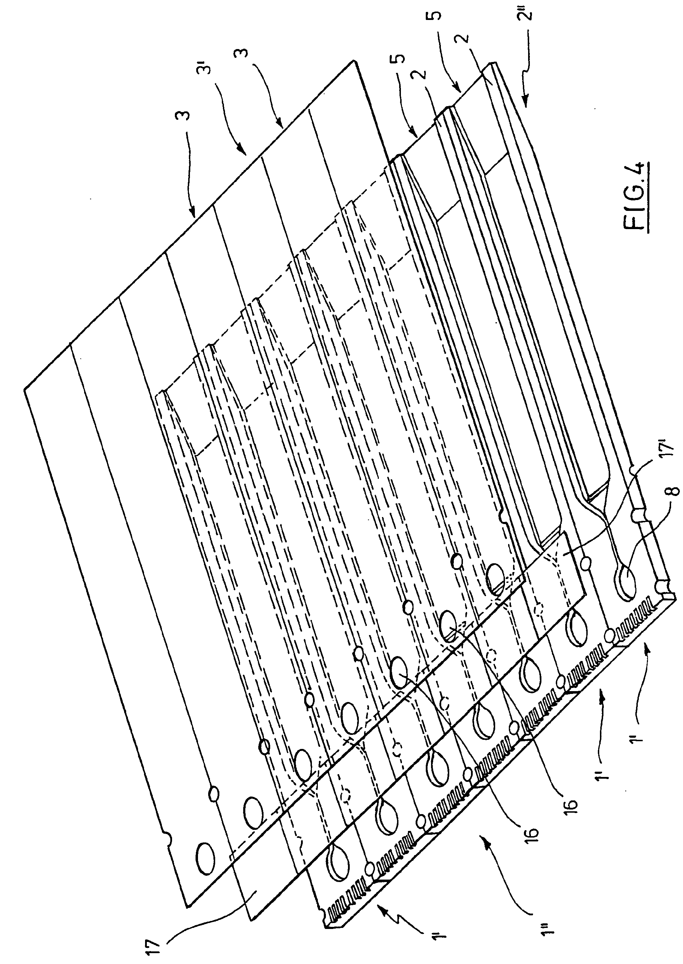

Fig. 4 zeigt ein Dosier-Disposable 1", das aus einer Vielzahl nebeneinander angeordneter Dosier-Disposables 1' gemäß Fig. 2 gebildet ist. Dabei sind die Dosier-Disposables 1' integral miteinander zu dem Dosier-Disposable 1" verbunden.

Hierzu hat das Dosier-Disposable 1" ein einziges Volumenteil 2", das aus mehreren parallel nebeneinander angeordneten Volumenteilen 2 besteht.

Ferner hat das Dosier-Disposable 1" eine einzige streifenförmige Membranfolie 3', die sich über sämtliche Nebenaufnahmen 8 des Volumenteils 2" erstreckt.

Ferner hat das Dosier-Disposable 1" eine einzige Abdeckfolie 17', die aus mehreren parallel nebeneinander angeordneten Abdeckfolien 3 besteht und sämtliche

Durchgänge 16 aufweist, die den Nebenaufnahmen 8 im Volumenteil 2" zugeordnet werden.

Die Elemente 2", 17' und 3' werden so übereinandergeschichtet und miteinander verbunden, daß sich ein Dosier-Disposable 1" mit einer Vielzahl parallel nebeneinander angeordneter und integral miteinander verbundener Dosier-Disposables 1' ergibt.

Gezeigt ist eine parallele Anordnung von acht Dosier-Disposables 1'. Damit können beispielsweise gängige 96-er Mikrotiterplatten verarbeitet werden. Mit einem entsprechenden Aufbau können jedoch auch höhere Verdichtungen erzielt werden, um 384-er oder 1536-er Mikrotiterplatten oder andere mit beliebigen Rastermaßen zu bearbeiten. Dafür können vorteilhafte Zuspitzungen gemäß Fig. 3b eingebracht werden, worauf anhand einer weiteren Zeichnung noch näher eingegangen wird.

Das Dosier-Disposable 1 " arbeitet mit einem Handhabungsgerät zusammen, dessen eine oder mehrere Verdrängungseinheiten abdichtend mit sämtlichen Durchgängen 16 verbunden werden.

Grundsätzlich kann die Anpassung des Rastermaßes der Mündung 5 an ein beliebiges Rastermaß zur Dosierung (z. B. Aufnahmen von Mikrotiterplatten) unabhängig von der Anpassung an ein festzulegendes Aufnahmemaß eines Handhabungsgeräts für die Durchgänge 16 auf einem Abschnitt des Dosier-Disposables 1" erfolgen. Dies gestattet es, mit einem Handhabungsgerät und entsprechend modifizierten Disposables 1" verschiedene Mikrotiterplatten-Rastermaße zu bearbeiten.

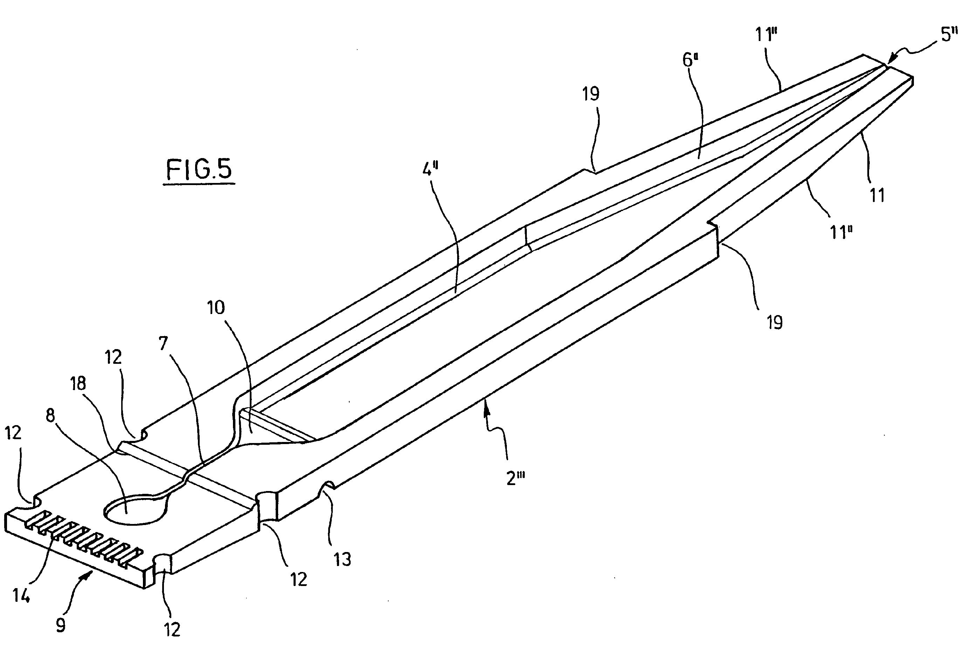

Die Besonderheiten des in den Fig. 5 gezeigten Volumenteils 2''' eines Dosier-Disposables liegen zum einen darin, daß dieses eine Vertiefung in Form eines Absatzes 18 aufweist, die zur Ablage einer dickeren Membranfolie 17 dient. Bei der Beschreibung von Fig. 2 wurde solch eine Vertiefung 18 bereits angesprochen.

Eine weitere Besonderheit dieses Volumenteils 2''' liegt darin, daß es eine Aufnahme 4" mit einem Düsenabschnitt 6" hat, der sich zur Mündung 5" hin stärker verjüngt als bei dem Ausführungsbeispiel von Fig. 3b.

Schließlich hat das Volumenteil 2''' an den schmalen Längsseiten Stufen 19, die der Endseite mit der Mündung 5" zugewandt sind. Die von den Stufen 19 zur Endseite mit der Mündung 5" verlaufenden schmalen Längsseiten 11 " schließen einen spitzeren Winkel als bei dem Ausführungsbeispiel gemäß Fig. 3b ein.

Dieses Volumenteil 2''' wird mit einer Membranfolie bestückt, die genau auf den Absatz 18 paßt, ohne die Codierung 14 und die Ausnehmungen 12 abzudecken. Die Oberseite der Membranfolie und des angrenzenden Abschnittes des Volumenteils 2''' sind niveaugleich. Membranfolie und der niveaugleich angrenzende Abschnitt des Volumenteils 2''' werden dann mit einer Abdeckfolie abgedeckt, deren Außenkontur genau derjenigen der abzudeckenden Bereiche entspricht.

Das fertigte Dosier-Disposable ist aufgrund der starken Anspitzungen in der Nähe der Mündung 5" besonders für das Einführen in enge Gefäßöffnungen geeignet. Mit den Stufen 19 kann es dann am Gefäßrand abgestützt werden.

Das Beispiel von Fig. 5 entspricht in Breite, Länge und Höhe demjenigen von Fig. 1. Das Volumen der Aufnahme 4" beträgt etwa 4,6 Mikroliter, was einer Tiefe der Aufnahme 4" von 0,5 mm und einer maximalen Breite von 1,3 mm entspricht.

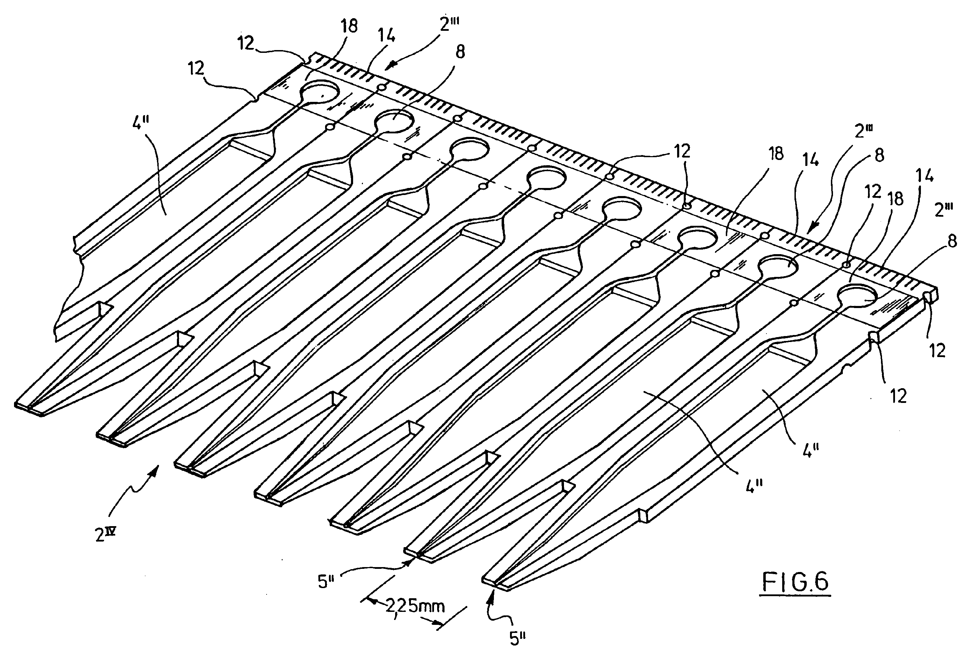

Fig. 6 zeigt ein Volumenteil 2^{IV}, das aus parallel nebeneinander angeordneten Volumenteilen 2''' besteht, die einteilig miteinander verbunden sind. Entsprechend der Breite jedes Volumenteils 2''' von 2,25 mm beträgt der Abstand benachbarter Mündungen 5" bzw. Kanäle 2,25 mm. Damit ist das Volumenteil auf den Rasterabstand der marktgängigen Mikrotiterplatten mit 1536 Aufnahmen (32 x 48 Wells) abgestimmt. Die Anzahl und der Abstand der einzelnen Kanäle ist jedoch grundsätzlich beliebig wählbar.

Mit Hilfe des Volumenteils 2^{IV} wird ein Dosier-Disposable hergestellt, indem ein sämtliche Absätze 18 abdeckender, jedoch die Codierungen 14 und die Ausnehmungen 12 freilassender Membranfolienstreifen aufgelegt wird. Auf die Oberseite des Membranfolienstreifens und des niveaugleich anschließenden Abschnitts des Volumenteils 2^{IV} wird eine Abdeckfolie abgebracht, deren Außenkontur den Außenkonturen der vorerwähnten Bereiche entspricht.

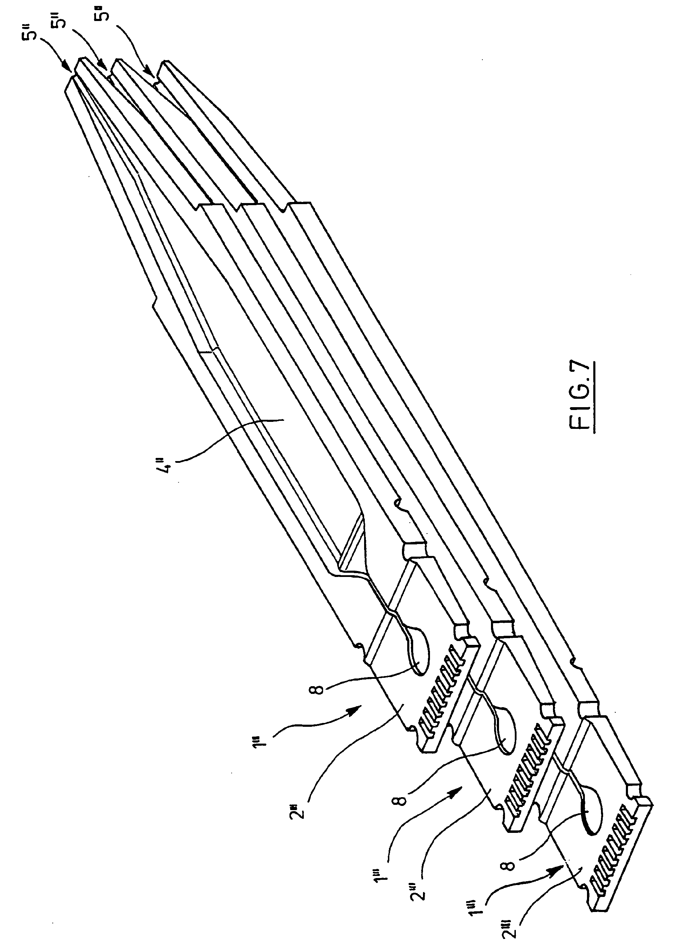

Die Fig. 7 zeigt eine Parallelisierung durch Anordnung mehrerer Disposables 1''' übereinander (Stapelung).

Gezeigt sind die Volumenteile 2"'. Es versteht sich jedoch, daß sämtliche Volumenteile 2''' noch in der oben beschriebenen Weise durch Membranfolien und Abdeckfolien ergänzt sind.

Die Dosier-Disposables sind unterschiedlich lang, um sämtliche Nebenaufnahmen 8 (bzw. Durchgänge aufliegender Abdeckfolien) mit einer Verdrängungseinrichtung verbinden zu können.

Die unterschiedliche Länge der Dosier-Disposables ist aufgrund der Minimierung des "Totvolumens" im Bereich der Kanäle 7 problemlos möglich. Dabei versteht sich, daß die Aufnahmen 4" für Flüssigkeit in sämtlichen Volumenteilen 2''' gleich groß sind, jedoch die Kanäle 7 unterschiedlich lang, um die an verschiedenen Position angeordneten Nebenaufnahmen 8 mit den Aufnahmen 4" zu verbinden.

Der Minimierung des Totvolumens durch die Kanäle 7 der verschiedenen Dosier-Disposables 1''' sollte möglichst eine Minimierung des Totvolumens auch im Handgerät für das Dosieren von Flüssigkeiten entsprechen. Einzelheiten zur Problematik des Totvolumens und der damit zusammenhängenden Volumenfehler sind beispielsweise der EP 0 562 358 B1 "Verfahren zur Korrektur des Volumenfehlers bei der Auslegung eines Pipettiersystems" entnehmbar.

Bei der beispielhaft zur Fig. 5 genannten Höhe des Dosier-Disposables von 0,5 mm beträgt bei der Anordnung gemäß Fig. 7 entsprechend der Abstand der Mündungen 5" benachbarter Dosier-Disposables ebenfalls nur 0,5 mm.

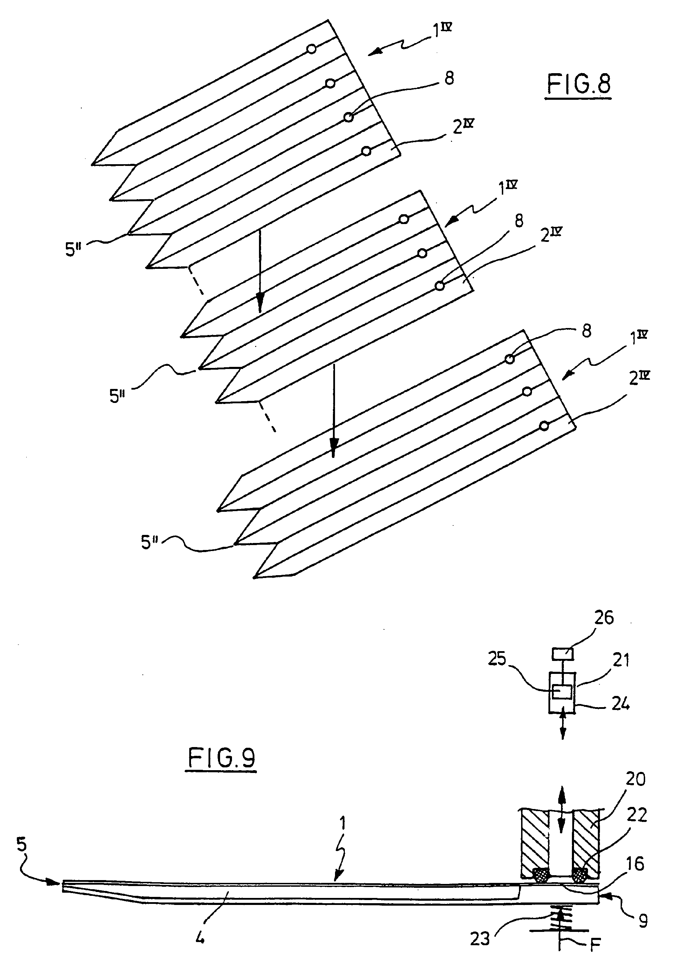

In Fig. 8 ist grobschematisch das Übereinanderstapeln von Dosier-Disposables 1^{IV} auf der Basis des Volumenteils 2^{IV} von Fig. 6 gezeigt. Die Dosier-Disposables 1^{IV} haben wiederum unterschiedliche Länge, um den Zugang zu den Nebenaufnahmen 8 zu ermöglichen. Mit den Mündungen 5" werden sie jedoch in einer gemeinsamen Ebene angeordnet.

Fig. 9 veranschaulicht die Verbindung eines Dosier-Disposables 1 mit einer Leitung 20 zu einer Verdrängungseinrichtung 21, die im verkleinerten Maßstab eingezeichnet ist. Die Leitung 20 sitzt über einen O-Ring 22 abdichtend auf der Oberseite der Abdeckfolie 3 auf, wobei der O-Ring 22 den Durchgang 16 umgibt. Damit ist die Leitung 20 über die Nebenaufnahme 8 und den Kanal 7 mit der Aufnahme 4 des Disposables 1 verbunden.

Die dichtende Anlage des Disposables 1 am O-Ring 22 wird durch eine Federeinrichtung 23 verstärkt, die in Richtung des Pfeils F wirkt. Das Dosier-Disposable 1 kann neben der Endseite 9 unten eine Anschrägung haben, die den Andrückvorgang unterstützt.

Die Verdrängungseinrichtung 21 wird von einem Zylinder 24 mit einem darin verschieblichen Kolben 25 gebildet, der mittels eines Betätigungsknopfes 26 betätigbar ist. Durch Verschieben des Kolbens 25 im Zylinder 24 kann somit Flüssigkeit durch die Mündung 5 in das Disposable 1 eingesogen bzw. aus der Mündung 5 ausgestoßen werden.

Entsprechend können auch die weiteren Beispiele für Disposables befüllt und entleert werden.

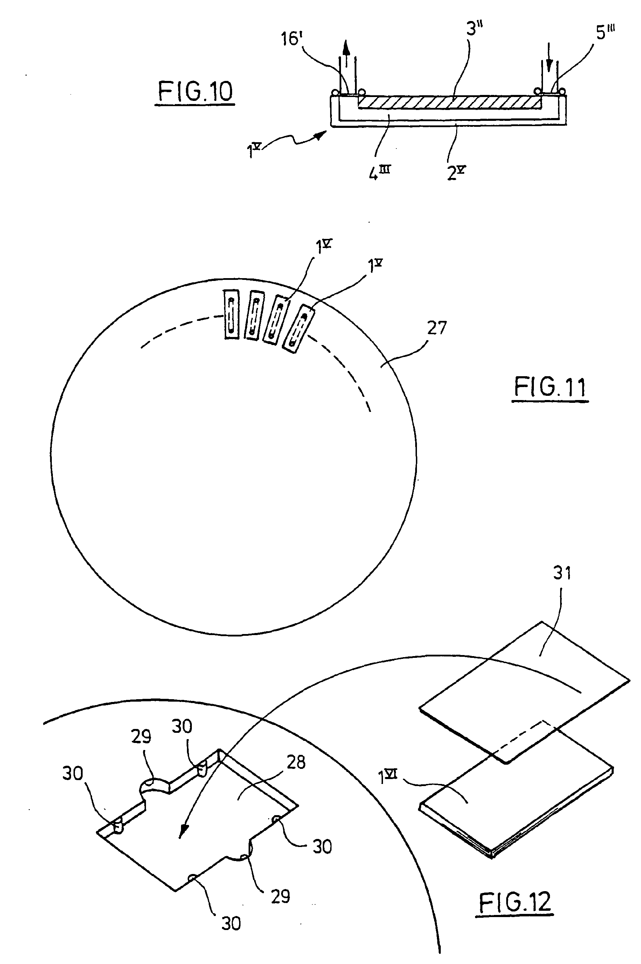

Gemäß Fig. 10 hat ein Zentrifugier-Disposable 1^{V} ein Volumenteil 2^{V} mit einer Aufnahme 4''' in Form eines langgestreckten Kanals. Das Volumenteil 2^{V} ist auf der Seite, in der die Aufnahme 4''' eingebracht ist, mittels einer Abdeckplatte oder Abdeckfolie 3" abgedeckt, die eine erste Öffnung oder Mündung 5''' zum Befüllen und Entleeren und eine zweite Öffnung oder einen Durchgang 16' für den Anschluß einer Verdrängungseinrichtung aufweist (die Öffnungen können auch in umgekehrter Weise genutzt werden).

Die Öffnungen 5''' und 16' werden beim Zentrifugieren abgedichtet, beispielsweise mittels - nicht gezeigter - Verschlußdeckel, die über Filmscharniere an eine Abdeckplatte 3" angelenkt sein können. Auch können separate Verschlußteile vorgesehen werden, worauf unten noch eingegangen wird.

Gemäß Fig. 11 werden mehrere Zentrifugier-Disposables 1^{V} gemäß Fig. 10 mit der Aufnahme 4''' radial ausgerichtet auf einem Zentrifugenrotor 27 angeordnet. Der Zentrifugenrotor 27 kann Aufnahmen haben, in denen die Zentrifugier-Disposables 1^{V} gehalten sind, um einer gleichmäßigen Massenverteilung durch Anordnung der Zentrifugier-Disposables 1^{V} oder von Ausgleichsgewichten Rechnung zu tragen. Das Problem des Massenausgleichs wird durch die geringe Masse der Zentrifugier-Disposables 1^{V} vermindert.

Gemäß Fig. 12 hat ein Zentrifugenrotor 27 Aufnahmen 28, die im wesentlichen komplementär zu Zentrifugier-Disposables 1^{VI} geformt sind. Ein Zentrifugier-Disposable 1^{VI} kann im Längsschnitt entsprechend Fig. 10 ausgebildet sein. Es kann sich um ein Disposable handeln, das eine oder mehrere parallel nebeneinander angeordnete Aufnahmen 4''' hat (z. B. 8fach, 16fach, 32fach-Disposable).

Die Aufnahmen 28 haben an zwei gegenüberliegenden Rändern Griffmulden 29, die ein Entnehmen der Dosier-Disposables 1^{VI} aus der Aufnahme 28 erleichtern.

Ferner sind in den Aufnahmen 28zentrierende Elemente 30 in der Form von Vorsprüngen an den Innenseiten der Ränder angeordnet, die für einen paßgenauen Sitz des planaren Disposables. 1^{VI} in der Aufnahme 28 sorgen.

Eine Abdeckung 31 soll die - nicht gezeigten - Öffnungen an der Oberseite des Disposables 1^{VI} abdichtend verschließen. Dabei kann es sich um ein Kunststoffteil handeln, das ganz oder teilweise (gegenüber den Öffnungen des Disposables 1^{VI}) mit einer elastischen Schicht versehen ist, die einen flüssigkeitsdichten Verschluß gewährleistet.

Die Abdeckung 31 wird ebenfalls von den zentrierenden Elementen 30 paßgenau in der Aufnahme 28 gehalten. Die zentrierenden Elemente 30 können eine gewisse Elastizität haben, um Disposable 1^{VI} und Abdeckung 31 einzuklemmen.

Die Abdeckung 31 sorgt dafür, daß unter der Wirkung der Zentrifugalkräfte keine Flüssigkeit aus dem Disposable 1^{VI} austritt.

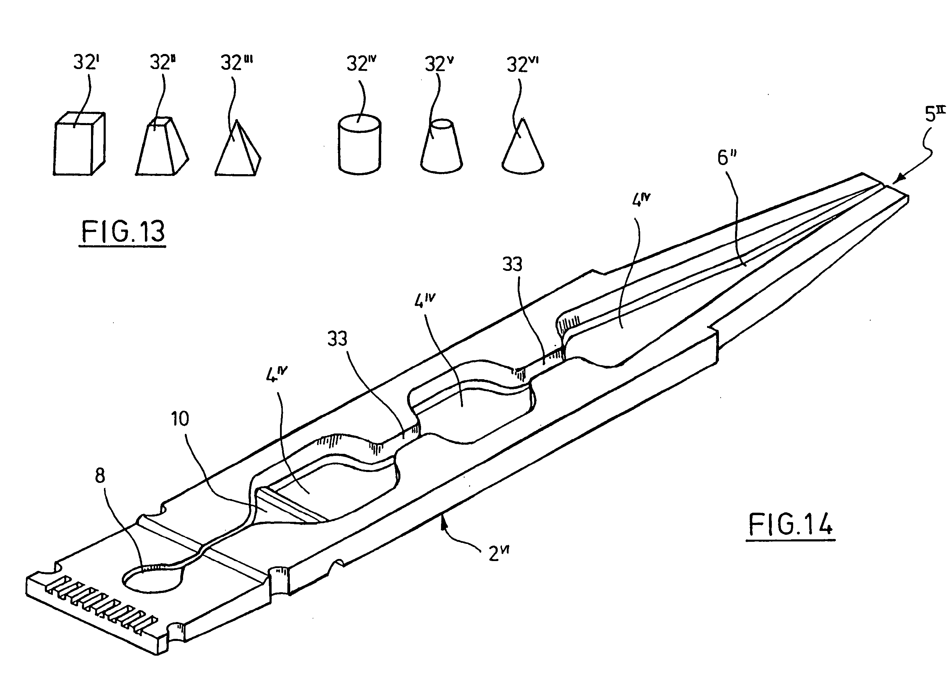

In der Fig. 13 sind verschiedene Strukturelemente gezeigt, die zur Oberflächenvergrößerung und/oder Turbulenzförderung und/oder Scherkrafterzeugung an einer Wand einer Aufnahme eines Disposables ausgebildet werden können. Vorzugsweise werden mehrere Elemente eines der gezeigten Typen oder mehrere Typen auf dem Boden der Aufnahme eines der zuvor erläuterten Volumenteile erzeugt.

Gemäß Fig. 13 können die Strukturelemente 32' bis 32^{VI} kastenförmig (32'), pyramidenstumpfförmig (32"), pyramidenförmig (32'''), zylindrisch (32^{IV}), kegelstumpfförmig (32^{V}) und kegelförmig (32^{VI}) sein. Die Elemente 32", 32''', 32^{V}, 32^{VI} haben den Vorteil, daß sie Entformungsschrägen aufweisen.

Ein Disposable, dessen Aufnahme mit derartigen Strukturelementen 32' bis 32^{VI} ausgestattet ist, kann zur Durchmischung einer Probenflüssigkeit genutzt werden, indem mittels einer Verdrängungseinrichtung (oder einer Betätigungseinrichtung) ein oder mehrere Druckstöße in die Probenflüssigkeit eingeleitet werden.

Derartige Strukturelemente sind auch im Hinblick auf die Durchführung von Reaktionen im Disposable von Vorteil. Grundsätzlich kann bei planaren Disposables die Funktion der Flüssigkeitsaufnahme mit verschiedenen Erfordernissen eines Reaktionsgefässes ideal verbunden werden. Im Hinblick auf spezielle Reaktionen kommen auch andere strukturelle Maßnahmen in Betracht.

So kann gemäß Fig. 14 in einem Volumenteil 2^{VI} (im Unterschied zum Volumenteil 2''') die Aufnahme auf verschiedene Aufnahmeabschnitte 4^{IV} verteilt sein, die über Verbindungskanäle 33 miteinander verbunden sind, deren Querschnitt den der Aufnahmeabschnitte 4^{IV} deutlich unterschreitet.

Die erste Aufnahme 4^{IV} weist zugleich den Düsenabschnitt 6" und die Mündung 5" auf.

Die letzte Aufnahme 4^{IV} ist über den Übergangsabschnitt 10 mit dem Kanal 7 und der Nebenaufnahme 8 verbunden.

Der mittlere Aufnahmeabschnitt 4^{IV} ist über die Verbindungskanäle 33 mit dem ersten und zweiten Aufnahmeabschnitt 4^{IV} verbunden.

Insbesondere bei diesem Disposable, das auch durch eine Membranfolie und eine Abdeckfolie komplettiert wird, können die Verbindungskanäle 33 hydropholisiert werden.

Sämtliche Disposables bieten die Möglichkeit der Beschichtung der Aufnahme. Hierbei ist es auch möglich, durch partiale Abdeckung während der Beschichtung der Aufnahme oder einer oder mehrerer Aufnahmeabschnitte (komplexe) unterschiedliche Funktionen (z. B. funktionelle Gruppen, Enzyme, hydrophile bzw. hydrophobe Eigenschaften) in einem Disposable zu realisieren. Auch Reagenzien bzw. Reaktionspartner (insbesondere Enzyme) für komplexe Reaktionen können in immobilisierter, wandgebundener Form zur Verfügung gestellt werden.

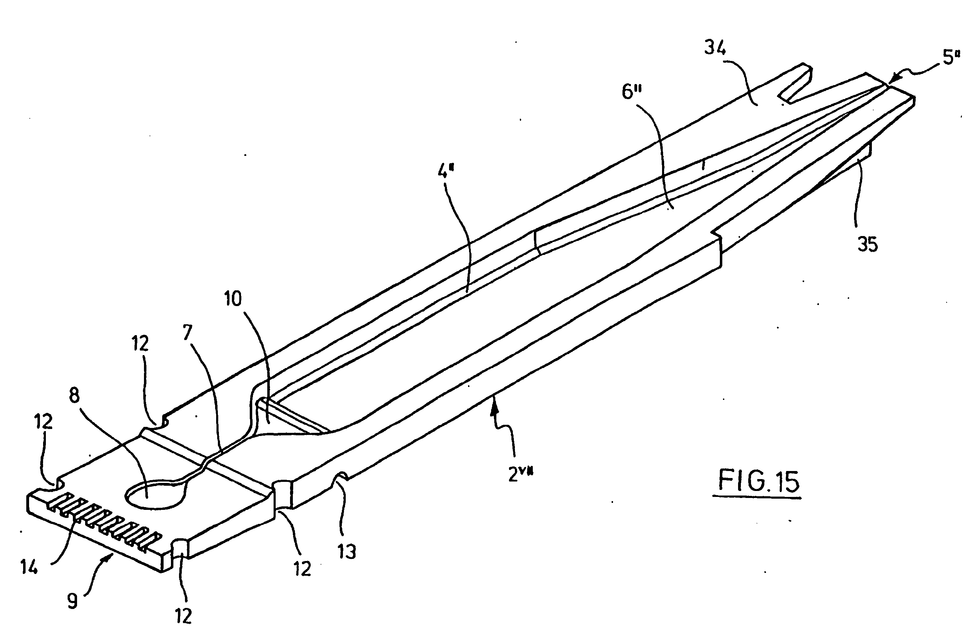

Das Volumenteil 2^{VII} für ein Dosier-Disposable gemäß Fig. 15 unterscheidet sich von dem Volumenteil 2''' der Fig. 5 dadurch, daß es einseitig oder beidseitig eine Einfädelhilfe 34 hat, um die Beschickung von Elektrophorese-Gelplatten zu erleichtern. Des weiteren ist eine Stufe 35 zum Abstützen bei der Beschickung von Elektrophorese-Gelen vorhanden.

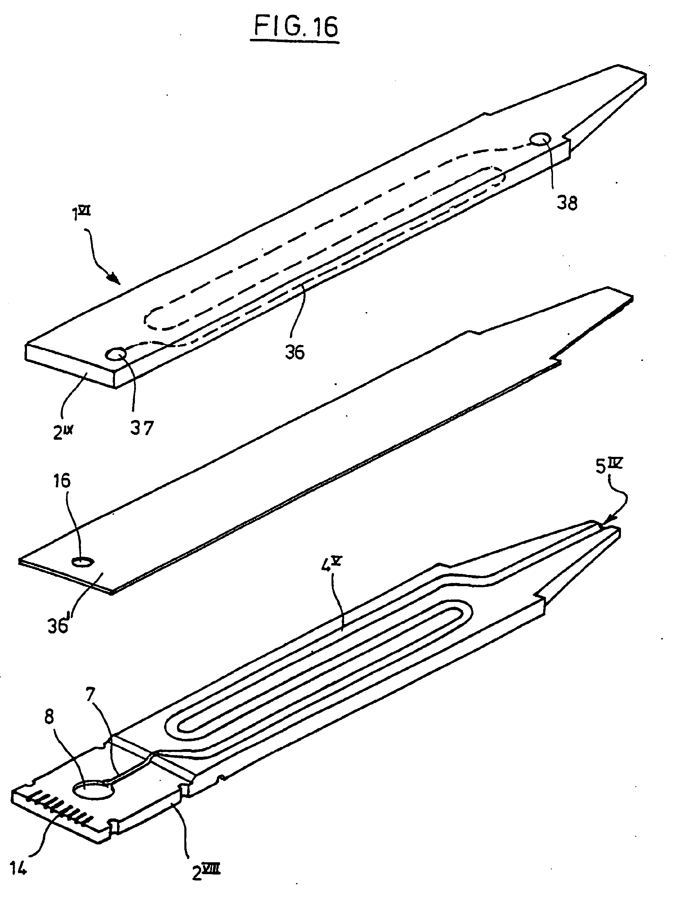

Mit einer aufkaschierten oder sonst befestigten Membranfolie sind unterschiedliche Funktionen eines Disposables erreichbar. Gemäß Fig. 16 kann durch Anordnung einer Dialysemembran 36 zwischen einem unteren Volumenteil 2^{VIII} und einem oberen Volumenteil 2^{IX} ein Dialyse-Disposable 1^{VI} geschaffen werden. Das untere Volumenteil 2^{VIII} hat eine Aufnahme 4^{V}, der von einer Mündung 5^{IV} aus einen mäanderförmigen Verlauf bis zum Kanal 7 zur Nebenaufnahme 8 hat. Die Dialysefolie 36 weist einen Durchgang 16 auf, der der Nebenaufnahme 8 zugeordnet ist.

Das zweite Volumenteil 2^{IX} hat eine Kammer 36, die der Kammer 4^{V} zugewandt ist und denselben mäanderförmigen Verlauf hat. Die beiden Enden der Kammer 36 sind mit Öffnungen 37, 38 in der Außenseite des Volumenteils 2^{IX} verbunden.

Das Volumenteil 2^{IX} ist kürzer als das Volumenteil 2^{VIII} und die Dialysemembran 36, so daß es den Durchgang 16 nicht bedeckt. Die drei Elemente 2^{VIII}, 36 und 2^{IX} werden in der gezeigten Anordnung übereinandergeschichtet und miteinander verbunden.

Durch Anschließen einer Verdrängungseinrichtung an den Durchgang 16 kann Probenflüssigkeit in die Aufnahme 4^{V} eingesaugt werden. Eine Dialyseflüssigkeit kann dann durch die Öffnungen 37 und 38 durch die Kammer 36 gespült werden. So ist es mittels einer salzarmen Dialyselösung möglich, Probenflüssigkeit zu entsalzen.

Im Rahmen der Erfindung besteht die Möglichkeit, beliebige Disposables mit zwei planaren Teilen oder Volumenteilen auszuführen, die über ein Gelenk (z. B. Filmscharnier) miteinander verbunden sind, so daß sie gemeinsam verarbeitet werden können und durch bloßes Zusammenklappen übereinanderschichtbar sind.

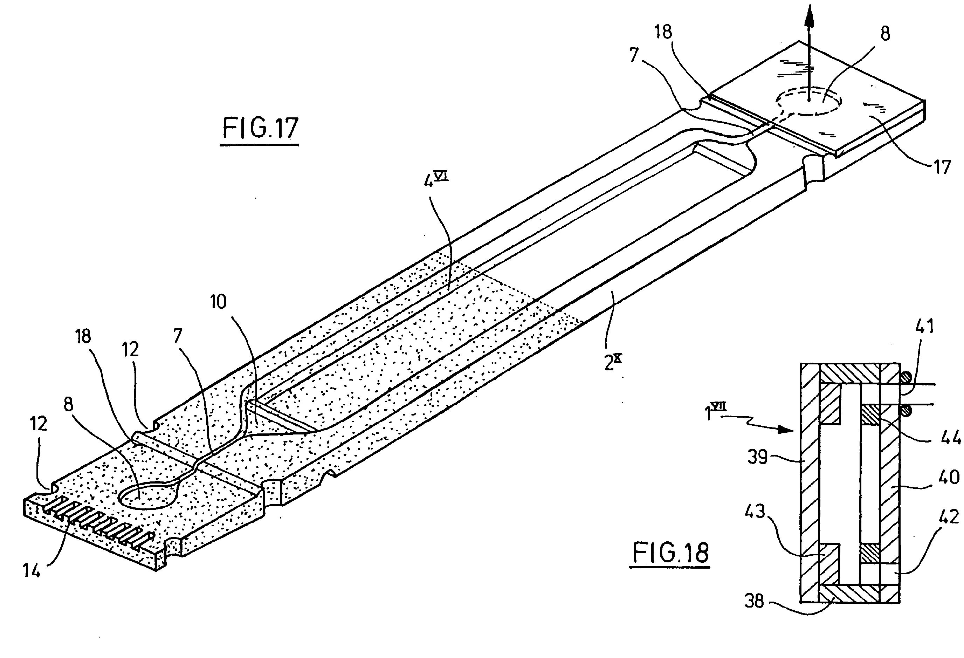

In der Fig. 17 ist ein Volumenteil 2^{X} eines Zentrifugier-/Filtrations-Disposables gezeigt. Dieses besteht aus zwei Hälften, die spiegelsymmetrisch zu einer Quermittelebene angeordnet ist und von denen zur Verdeutlichung in der Zeichnung die eine dunkel und die andere hell getönt ist. Die beiden Hälften entsprechen der - in der Zeichnung - linken Hälfte des Volumenteils 2 der Fig. 1.

Somit ist die Aufnahme 4^{VI} an beiden Enden über Kanäle 7 mit Nebenaufnahmen 8 verbunden.

Auf dem Absatz 18 der - in der Zeichnung rechten - Hälfte ist eine Membran 17 mit Trennfunktion (z. B. eine Ultrafiltrationsmembran) angebracht.

Das Ganze wird dann noch mit einer Abdeckfolie abgedeckt, die im Bereich der Nebenaufnahmen 8 Durchgänge aufweist.

Die Probenaufnahme erfolgt durch die - in der Zeichnung linke - Nebenaufnahme 8 und der Abzug des Filtrats durch die - in der Zeichnung rechte - Nebenaufnahme 8. Das Retentat bleibt vor der Membran 17 zurück.

Die Aufnahme und Auftrennung der Probenflüssigkeit in Filtrat und Retentat erfolgt durch Anlegen von Unterdruck und/oder unter Nutzung der Zentrifugalkraft.

Schließlich ist in der Fig. 18 grobschematisch ein Küvetten-Disposable 1^{VII} dargestellt. Dieses hat ein planares Rahmenteil 38, das beidseitig mit PFA-Folien 39, 40 beschichtet ist, welche die Eigenschaft haben, durchlässig für UV-Strahlung zu sein. Die Folie 14 hat Öffnungen 41 und 42 für den Durchgang von Probenflüssigkeit bzw. Verdrängungsluft. An den Innenseiten der Folien sitzen rahmenförmige Elemente 43, 44, die der Abstützung der Folie 39, 40 bzw. Strömungsführung dienen.

## Patentansprüche

1. System zum Handhaben von Flüssigkeitsproben umfassend:
- mindestens eine Einrichtung zum Handhaben von Flüssigkeitsproben (1) mit mindestens zwei übereinander geschichteten und miteinander verbundenen, planaren Elementen (2, 3), zwischen denen eine Aufnahme (4) für eine Flüssigkeitsprobe ausgebildet ist, die sich zwischen einer nach außen führenden Mündung (5) zum Aufnehmen und Abgeben von Flüssigkeitsprobe und einem nach außen führenden Durchgang (16) zum Verbinden der Aufnahme (4) mit einer Verdrängungseinrichtung (21) für Luft oder ein anderes Gas erstreckt, wobei die Einrichtung zum Handhaben von Flüssigkeitsproben (1) im Bereich der Mündung (5) eine Anspitzung zum Einführen in enge Gefäße aufweist, und
- ein Handhabungsgerät mit der Verdrängungseinrichtung (21), einer Einrichtung zum lösbaren Befestigen der mindestens einen Einrichtung zum Handhaben der Flüssigkeitsproben (1) und einer die Verdrängungseinriclitung (21) mit dem Durchgang (16) abdichtend verbindenden Leitung (20), wenn die Einrichtung zum Handhaben von Flüssigkeitsproben (1) in der Einrichtung zum lösbaren Befestigen angeordnet ist, um mittels der Verdrängungseinrichtung (21) Flüssigkeitsproben (1) durch die Mündung (5) einzusaugen und aus dieser auszustoßen.

2. System zum Handhaben von Flüssigkeitsproben umfassend:
- mindestens eine Einrichtung zum Handhaben von Flüssigkeitsproben (1), mit mindestens zwei übereinander geschichteten und miteinander verbundenen, planaren Elementen (2, 3), zwischen denen eine Aufnahme (4) für eine Flüssigkeitsprobe ausgebildet ist, die mit einer nach außen führenden Mündung (5) zum Aufnehmen und Abgeben von Flüssigkeitsproben verbunden ist und eine verlagerbare Begrenzungswand zum Verdrängen eines in der Aufnahme (4) enthaltenen Fluids hat, die zum Verlagern mit einer externen Betätigungseinrichtung verbindbar ist, wobei die Einrichtung zum Handhaben von Flüssigkeitsproben (1) im Bereich der Mündung (5) eine Anspitzung zum Einführen in enge Gefäße aufweist,
- und ein Handhabungsgerät mit der Betätigungseinrichtung und einer dieser zugeordneten Einrichtung zum lösbaren Befestigen der mindestens einen Einrichtung zum Handhaben von Flüssigkeitsproben, wobei die Betätigungseinrichtung mit der verlagerbaren Begrenzungswand der Einrichtung zum Handhaben von Flüssigkeitsproben (1) gekoppelt ist, wenn letztere in der Einrichtung zum lösbaren Befestigen angeordnet ist, um mittels der Betätigungseinrichtung Flüssigkeitsproben (1) durch die Mündung (5) einzusaugen und aus dieser auszustoßen.

3. System nach Anspruch 1 oder 2, bei der die planaren Elemente (2, 3) und/oder die Begrenzungswand der Einrichtung zum Handhaben von Flüssigkeitsproben (1) Plättchen und/oder Folien und/oder Membranen sind.

4. System nach einem der Ansprüche 1 bis 3, bei der die planaren Elemente (2, 3) der Einrichtung zum Handhaben von Flüssigkeitsproben (1) aus Kunststoff und/oder Glas und/oder Halbleitermaterial und/oder Metall sind.

5. System nach einem der Ansprüche 1 bis 4, bei der die Aufnahme (4) der Einrichtung zum Handhaben von Flüssigkeitsproben (1) eine Vertiefung in einer Seite eines planaren Elements (2) umfaßt, die von einem weiteren planaren Element (3) abgedeckt ist, und/oder bei der die Aufnahme (4) Vertiefungen in einander zugewandten Seiten zweier übereinanderliegender planarer Elemente (2, 3) umfaßt und/oder bei der die Aufnahme (4) einen Durchbruch in einem planaren Element (2, 3) umfaßt, das auf beiden Seiten von planaren Elementen (2, 3) abgedeckt ist.

6. System nach Anspruch 5, bei der ein planares Element (2) der Einrichtung zum Handhaben von Flüssigkeitsproben (1) ein Plättchen mit einer auf einer Seite als Vertiefung ausgebildeten Aufnahme und ein weiteres planares Element (3) eine Folie ist, die das Plättchen auf der Seite der Aufnahme (4) abdeckt.

7. System nach einem der Ansprüche 1 bis 6, bei der die Mündung (5) der Einrichtung zum Handhaben von Flüssigkeitsproben (1) in einem ersten Randbereich der miteinander verbundenen planaren Elemente (2, 3) zwischen den miteinander verbundenen planaren Elementen (2, 3) nach außen erstreckt ist oder quer durch eines der miteinander verbundenen planaren Elemente (2, 3) nach außen erstreckt ist.

8. System nach einem der Ansprüche 1 bis 7, bei der der Durchgang (16) der Einrichtung zum Handhaben von Flüssigkeitsproben (1) quer durch eines der miteinander verbundenen planaren Elemente (2, 3) nach außen erstreckt ist oder in einem zweiten Randbereich der miteinander verbundenen planaren Elemente (2, 3) zwischen den miteinander verbundenen planaren Elementen (2, 3) nach außen erstreckt ist.

9. System nach Anspruch 7 oder 8, bei der die Mündung (5) der Einrichtung zum Handhaben von Flüssigkeitsproben (1) zwischen einem Plättchen und einer Folie nach außen erstreckt ist und/oder der Durchgang (16) quer durch eine ein Plättchen abdeckende Folie nach außen erstreckt ist.

10. System nach einem der Ansprüche 7 bis 9, bei der die Mündung (5) der Einrichtung zum Handhaben von Flüssigkeitsproben (1) in einem ersten Randbereich oder in dessen Nähe angeordnet ist und der Durchgang (16) in der Nähe eines vom ersten Randbereich entfernten, zweiten Randbereich oder in diesem zweiten Randbereich angeordnet ist.

11. System nach einem der Ansprüche 1 bis 10, bei der die Einrichtung zum Handhaben von Flüssigkeitsproben (1) im wesentlichen zungenförmig ist und die Mündung (5) in einer ersten Endseite und den Durchgang (16) in einer Längsseite hat.

12. System nach Anspruch 11, bei der die Einrichtung zum Handhaben von Flüssigkeitsproben (1) sich in der Hauptausdehnungsebene der planaren Elemente (2, 3) und/oder senkrecht dazu zur Mündung (5) hin verjüngt.

13. System nach einem der Ansprüche 1 bis 12, bei der die Aufnahme (4) der Einrichtung zum Handhaben von Flüssigkeitsproben (1) ein Kanal ist.

14. System nach einem der Ansprüche 1 bis 13, bei der die Mündung (5) der Einrichtung zum Handhaben von Flüssigkeitsproben (1) an einem Ende der Aufnahme (4) und der Durchgang (16) am anderen Ende der Aufnahme (4) angeordnet ist.

15. System nach Anspruch 13 oder 14, bei der sich der Kanal im wesentlichen in Längsrichtung der Einrichtung zum Handhaben von Flüssigkeitsproben (1) erstreckt.

16. System nach einem der Ansprüche 13 bis 15, bei der der Kanal der Einrichtung zum Handhaben von Flüssigkeitsproben (1) mäanderförmig oder spiralförmig ist.

17. System nach einem der Ansprüche 1 bis 16, bei der die Aufnahme (4) der Einrichtung zum Handhaben von Flüssigkeitsproben (1) an ihrem der Mündung (5) gegenüberliegenden Ende über einen Kanal, der einen geringeren Querschnitt als die Aufnahme (4) aufweist, mit einer Nebenaufnahme (8) verbunden ist, die kleiner als die Aufnahme (4) ist.

18. System nach einem der Ansprüche 1 bis 17, bei der die Aufnahme (4) der Einrichtung zum Handhaben von Flüssigkeitsproben (1) sich zur Mündung (5) hin düsenmäßig verjüngt und/oder diffusormäßig erweitert.

19. System nach einem der Ansprüche 1 bis 18, bei der die Mündung (5) der Einrichtung zum Handhaben von Flüssigkeitsproben (1) mehrere Mündungskanäle umfaßt, die parallel oder auf ein gemeinsames Zentrum ausgerichtet oder divergierend sind.

20. System nach einem der Ansprüche 1 bis 19, bei der die Einrichtung zum Handhaben von Flüssigkeitsproben (1) in der Nähe der Mündung (5) mindestens eine Stufe (35) und/oder mindestens ein Führungselement zum Abstützen und/oder Führen an einem Bezugsobjekt hat.

21. System nach einem der Ansprüche 1 bis 20, bei der die Einrichtung zum Handhaben von Flüssigkeitsproben (1) außen um den Rand des Durchganges (16) eine Dichtfläche für den abdichtenden Anschluß einer Verdrängungseinrichtung (21) hat.

22. System nach einem der Ansprüche 1 bis 21, bei der die Aufnahme (4) der Einrichtung zum Handhaben von Flüssigkeitsproben (1) mehrere Aufnahmekammern (4^{IV}) hat, die durch Verbindungskanäle (33) miteinander verbunden sind.

23. System nach einem der Ansprüche 1 bis 22, bei der mindestens ein planares Element (2, 3) der Einrichtung zum Handhaben von Flüssigkeitsproben (1) im Bereich der Aufnahme (4) eine chemisch modifizierte und/oder eine strukturierte Oberfläche aufweist.

24. System nach einem der Ansprüche 1 bis 23, bei der die Einrichtung zum Handhaben von Flüssigkeitsproben (1) mindestens ein zusätzliches Funktionselement aufweist, das eine Membran (17) und/oder ein Faservlies und/oder ein Filterelement und/oder ein optisches Fenster und/oder eine Elektrode und/oder eine oberflächenvergrößernde und/oder turbulenzfördernde und/oder scherkrafterzeugende Struktur und/oder ein Positionierelement und/oder ein Rastelement und/oder eine Codierung (14) ist.

25. System nach Anspruch 24, bei der die Membran (17) und/oder das Faservlies und/oder das Filterelement der Einrichtung zum Handhaben von Flüssigkeitsproben (1) zwischen zwei planaren Elementen (2, 3) zwischen einer Aufnahme (4) und einem Durchgang (16) und/oder mindestens zwei Aufnahmen (4) und/oder einer Aufnahme (4) und einer Mündung (5) der verschiedenen planaren Elemente (2, 3) angeordnet ist.

26. System nach Anspruch 25, bei der ein planares Element (2) der Einrichtung zum Handhaben von Flüssigkeitsproben (1) mindestens eine Vertiefung (18) hat, in der die Membran (17) und/oder das Faservlies und/oder das Filterlement plaziert ist, so daß diese/dieses mit dem angrenzenden Bereich des planaren Elements (2) eine Ebene bildet, die von einem weiteren planaren Element (3) vollständig abgedeckt ist.

27. System nach einem der Ansprüche 24 bis 26, bei der der Aufnahme (4^{V}) für Probenflüssigkeit der Einrichtung zum Handhaben von Flüssigkeitsproben (1) in einem planaren Element eine Aufnahme (36) für Dialyseflüssigkeit in einem weiteren planaren Element zugeordnet ist und die beiden Aufnahmen (4^{V}, 36) durch zwischen den planaren Elementen angeordnete Dialysemembran (36') getrennt sind.

28. System nach Anspruch 27, bei der die Aufnahme (36) der Einrichtung zum Handhaben von Flüssigkeitsproben (1) für Dialyseflüssigkeit mindestens eine Öffnung (37, 38) für den Durchgang von Dialyseflüssigkeit hat.

29. System nach einem der Ansprüche 24 bis 28, bei der die Codierung (14) und/oder das Positionierelement und/oder das Rastelement auf einer Außenseite der Einrichtung zum Handhaben von Flüssigkeitsproben (1) in einem Abstand von der Mündung (5) angeordnet ist.

30. System nach einem der Ansprüche 1 bis 29, bei der mindestens ein planares Element (2, 3) der Einrichtung zum Handhaben von Flüssigkeitsproben (1) strahlungsdurchlässig für eine optische Messung ist.

31. System nach einem der Ansprüche 1 bis 30, bei der die Einrichtung zum Handhaben von Flüssigkeitsproben (1) mindestens ein lichtstrahlführendes Element für eine optische Messung aufweist.

32. System nach einem der Ansprüche 1 bis 31, bei der der Mündung (5) und/oder dem Durchgang (16) und/oder der Öffnung (37, 38) der Einrichtung zum Handhaben von Flüssigkeitsproben (1) mindestens ein Verschluß zum wahlweisen Verschließen zugeordnet ist.

33. System (1) gemäß einem der Ansprüche 1 bis 32 mit mehreren nebeneinander angeordneten und miteinander verbundenen Einrichtungen zum Handhaben von Flüssigkeitsproben.

34. System nach Anspruch 33, bei der die mehreren nebeneinander angeordneten Einrichtungen der Einrichtung zum Handhaben von Flüssigkeitsproben (1) aus gemeinsamen planaren Elementen (2, 3) gebildet sind.

35. System gemäß einem der Ansprüche 1 bis 34 mit mehreren übereinander angeordneten Einrichtungen zum Handhaben von Flüssigkeitsproben (1).

36. System nach Anspruch 35, bei der die übereinander angeordneten Einrichtungen zum Handhaben von Flüssigkeitsproben (1) miteinander verbunden sind.

37. System nach einem der Ansprüche 33 bis 36, bei dem die Einrichtung zum Handhaben von Flüssigkeitsproben (1) entlang mindestens einer zwischen zwei Aufnahmen angeordneten Bruchlinie in mindestens zwei kleinere Einrichtungen zum Handhaben von Flüssigkeitsproben (1) zerlegbar sind.

38. System nach einem der Ansprüche 1 bis 37, bei der die Verdrängungseinrichtung (21) oder die Betätigungseinrichtung und die Einrichtung zum Befestigen fest miteinander verbunden sind.

39. System nach einem der Ansprüche 1 und 3 bis 38, bei dem die Verdrängungseinrichtung (21) mindestens eine Kolbenzylinder-Einrichtung (24, 25) aufweist.

40. System nach einem der Ansprüche 1 und 3 bis 39, bei dem die Verdrängungseinrichtung (21) eine Pumpe und eine Ventileinrichtung zum Verbinden bzw. Trennen der Saugseite in der Pumpe mit oder von der Einrichtung zum Handhaben von Flüssigkeitsproben (1) hat.

41. System nach Anspruch 40, das eine Kammer aufweist für Über- und/oder Unterdruck, die an die Pumpe angeschlossen und über die Ventileinrichtung mit der Einrichtung zum Handhaben von Flüssigkeitsproben verbindbar ist.

42. System nach einem der Ansprüche 1 bis 41, bei dem die Verdrängungseinrichtung (21) oder Betätigungseinrichtung in einem Mischbetrieb zwecks Durchmischung einer Flüssigkeitsprobe in der Aufnahme (4) eine oder mehrere Druckschwankungen in die Aufnahme (4) einleitet.

43. System nach einem der Ansprüche 1 bis 42, bei dem die Einrichtung zum lösbaren Befestigen eine Steckaufnahme ist, in die eine Einrichtung zum Handhaben von Flüssigkeitsproben (1) mit einem Steckende klemmend einsteckbar ist.

44. System nach einem der Ansprüche 1 and 3 bis 43, bei dem der Einrichtung zum lösbaren Befestigen eine Andrückfeder (23) zugeordnet ist, welche eine eingesteckte Einrichtung zum Handhaben von Flüssigkeitsproben (1) gegen die Leitung (20) oder die Betätigungseinrichtung drückt.

45. System nach einem der Ansprüche 1 und 3 bis 44, bei dem der Leitung (20) ein O-Dichtring (22) zur abdichtenden Anlage am äußeren Rand des Durchganges (16) der Einrichtung zum Handhaben von Flüssigkeitsproben (1) zugeordnet ist.

46. System nach einem der Ansprüche 1 bis 45, bei dem mittels der Einrichtung zum lösbaren Befestigen mindestens zwei Einrichtungen zum Handhaben von Flüssigkeitsproben (1) so befestigbar sind, daß deren Aufnahmen (4) über Durchgang (16) und/oder Mündung (5) abdichtend miteinander verbunden sind und der Durchgang (16) oder die Begrenzungswand einer Einrichtung zum Handhaben von Flüssigkeitsproben (1) mit der Verdrängungseinrichtung (21) verbunden oder mit der Betätigungseinrichtung gekoppelt ist, um Probenflüssigkeit von außen in eine Einrichtung zum Handhaben von Flüssigkeitsproben (1) aufzunehmen und/oder nach außen abzugeben und/oder zwischen mindestens zwei Einrichtungen zum Handhaben von Flüssigkeitsproben zu übertragen.

47. System zum Handhaben von Flüssigkeitsproben nach einem der Ansprüche 1 bis 46, mit einem Handhabungsgerät mit einem Zentrifugenrotor (27), der die Einrichtung zum lösbaren Befestigen mindestens einer Einrichtung zum Handhaben von Flüssigkeitsproben (1) aufweist.

48. System nach Anspruch 47, bei dem die Einrichtung zum lösbaren Befestigen eine Aufnahme (28) zum formschlüssigen Aufnehmen einer Einrichtung zum Handhaben von Flüssigkeitsproben (1) ist.

49. System nach Anspruch 47 oder 48, bei dem die Aufnahme Griffmulden (29) zum seitlichen Ergreifen der Einrichtung zum Handhaben (1) und/oder Klemmelemente zum seitlichen Festklemmen der Einrichtung zum Handhaben von Flüssigkeitsproben (1) und/oder Abdichtelemente zum Abdichten von Öffnungen der Einrichtung zum Handhaben (1) aufweist.

50. System nach einem der Ansprüche 47 bis 49, das eine so beschaffene Einrichtung zum lösbaren Befestigen mindestens zweier Einrichtungen zum Handhaben von Flüssigkeitsproben (1) hat, dass deren Aufnahmen (4) über Durchgang (16) und/oder Mündung (5) abdichtend miteinander verbunden sind, um beim Zentrifugieren Probenflüssigkeit zwischen den Einrichtungen zum Handhaben von Flüssigkeitsproben (1) zu übertragen.

51. System zum Handhaben von Flüssigkeitsproben nach einem der Ansprüche 1 bis 50 mit einem Handhabungsgerät mit einer Heizeinrichtung und einem dieser zugeordneten Lager für die Lagerung mindestens einer Einrichtung zum Handhaben von Flüssigkeitsproben (1) so, daß eine davon aufgenommene Flüssigkeitsprobe mittels der Heizeinrichtung aufheizbar ist.

52. System nach Anspruch 51, bei dem die Heizeinrichtung eine Kontaktfläche aufweist, die bei Lagerung einer Einrichtung zum Handhaben von Flüssigkeitsproben (1) auf dem Lager in flächigen Kontakt mit einem planaren Element (2, 3) der Einrichtung zum Handhaben von Flüssigkeitsproben (1) kommt.

53. System zum Handhaben von Flüssigkeitsproben nach einem der Ansprüche 1 bis 52, mit einem Handhabungsgerät mit einer optischen Messeinrichtung und einer Einrichtung zum lösbaren Befestigen mindestens einer Einrichtung zum Handhaben von Flüssigkeitsproben (1) so, daß letztere bei Anordnung in der Einrichtung zum lösbaren Befestigen mit ihrer Aufnahme (4) im Strahlengang der optischen Meßeinrichtung angeordnet ist.

54. System nach einem der Ansprüche 1 bis 53, bei dem die Elemente eines oder mehrerer Handhabungsgeräte in oder an mindestens einem Chassis und/oder Gehäuse angeordnet sind.

55. System nach Anspruch 54, bei dem mehrere Handhabungsgeräte ein oder mehrere gemeinsame Elemente haben.

56. System nach einem der Ansprüche 1 bis 55, bei dem das mindestens eine Handhabungsgerät manuell betätigbar und/oder automatisch arbeitend und/oder ein zur Anwendung in die Hand nehmbares Gerät (Handgerät) ist.

57. System nach einem der Ansprüche 1 bis 56, bei dem mindestens zwei Handhabungsgeräte automatisch zusammenarbeiten.

58. System nach einem der Ansprüche 1 bis 57, bei dem mindestens eine weitere Handhabungseinrichtung zum Transportieren von Einrichtungen zum Handhaben von Flüssigkeitsproben (1) zwischen verschiedenen Handhabungsgeräten und/oder mindestens einem Handhabungsgerät und einer Eingabestation und/oder einer Ausgabestation und/oder zum Unterstützen der Handhabungsgeräte bei ihrer Tätigkeit vorhanden ist.

59. Verfahren zum Herstellen einer Einrichtung zum Handhaben von Flüssigkeitsproben (1) eines Systems nach einem der Ansprüche 1 bis 58, bei dem
- die Oberflächen der planaren Elemente (2, 3) strukturiert,
- mehrere planare Elemente (2, 3) in einander überdeckende Beziehung gebracht
- miteinander verbunden und
- bei dem die verbundenen planaren Elemente (2, 3) senkrecht zu der Hauptausdehnungsebene der planaren Elemente in einzelne Einrichtungen zum Handhaben von Flüssigkeitsproben (1) zerlegt werden, wobei die einzelne Einrichtung ein einziges Dosier-Disposable (1') oder mehrere parallele Dosier-Disposables (1') für die Bearbeitung von Mikrotiterplatten umfaßt.

60. Verfahren nach Anspruch 59, bei dem mindestens ein planares Element (2, 3) vor der Verbindung mit mindestens einem weiteren planaren Element (2, 3) einer Oberflächenbehandlung unterzogen wird.

## Claims

1. A system for handling liquid samples, comprising:
- at least one device for handling liquid samples (1) having at least two superposed and interconnected planar elements (2, 3) between which a well (4) for a liquid sample is formed which extends between an outwardly leading mouth (5) to receive and/or deliver a liquid sample and an outwardly leading passage (16) to connect the well (4) to a displacement device (21) for air or another gas, wherein the device for handling liquid samples (1) is tapered towards the mouth (5) for introduction into narrow vessels, and
- a handling apparatus having the displacement device (21), a device for releasably mounting the at least one device for handling the liquid samples (1), and a line (20) sealingly connecting the displacement device (21) to the passage (16) if the device for handling liquid samples (1) is disposed in the device for releasably mounting for absorbing and ejecting liquid samples (1) through the mouth (5) using the displacement device (21).

2. The system for handling liquid samples, comprising:
- at least one device for handling liquid samples (1) having at least two superposed and interconnected planar elements (2, 3) between which a well (4) for a liquid sample is formed which is connected to an outwardly leading mouth (5) to receive and/or deliver liquid samples and has a displaceable limitation wall for displacing a fluid contained in the well (4) which, for displacement, is adapted to be connected to an external actuation device, wherein the device for handling liquid samples (1) is tapered towards the mouth (5) for introduction into narrow vessels,
- and a handling apparatus having the actuation device and a device associated therewith for releasably mounting the at least one device for handling liquid samples with the actuation device being coupled to the displaceable limitation wall of the device for handling liquid samples (1) if the latter is disposed in the device for releasably mounting for absorbing and ejecting liquid samples (1) through the mouth (5) using the displacement device (21).

3. The system according to claim 1 or 2 wherein the planar elements (2, 3) and/or the limitation wall of the device for handling liquid samples (1) are laminas and/or sheetings and/or membranes.

4. The system according to any one of claims 1 to 3 wherein the planar elements (2, 3) of the device for handling liquid samples (1) are made of plastic and/or glass and/or a semiconductor material and/or metal.

5. The system according to any one of claims 1 to 4 wherein the well (4) of the device for handling liquid samples (1) comprises an indentation in one side of a planar element (2) which is covered by another planar element (3) and/or wherein the well (4) comprises indentations in the sides facing each other of two superposed planar elements (2, 3) and/or wherein the well (4) comprises a through opening in a planar element (2, 3) which is covered by planar elements (2, 3) on either side.

6. The system according to claim 5 wherein a planar element (2) of the device for handling liquid samples (1) covers a lamina having a well formed as an indentation on one side and another planar element (3) is a sheeting which covers the lamina on the side where the well (4) is.

7. The system according to any one of claims 1 to 6 wherein the mouth (5) of the device for handling liquid samples (1) is extended outwardly in a first peripheral area of the interconnected planar elements (2, 3) between the interconnected planar elements (2, 3) or is extended outwardly in a cross direction through one of the interconnected planar elements (2, 3).

8. The system according to any one of claims 1 to 7 wherein the passage (16) of the device for handling liquid samples (1) is extended outwardly in a cross direction through one of the interconnected planar elements (2, 3) or is extended outwardly in a second peripheral area of the interconnected planar elements (2, 3) between the interconnected planar elements (2, 3).

9. The system according to claim 7 or 8 wherein the mouth (5) of the device for handling liquid samples (1) is extended outwardly between a lamina and a sheeting and/or the passage (16) is extended outwardly in a cross direction through a sheeting covering a lamina.

10. The system according to any one of claims 7 to 9 wherein the mouth (5) of the device for handling liquid samples (1) is disposed in a first peripheral area or in the vicinity thereof and the passage (16) is disposed in the vicinity of a second peripheral area remote from the first peripheral area or in this second peripheral area.

11. The system according to any one of claims 1 to 10 wherein the device for handling liquid samples (1) is substantially of a tongue shape and has the mouth (5) in a first end side and the passage (16) in a longitudinal side.

12. The system according to claim 11 wherein the device for handling liquid samples (1) is tapered towards the mouth (5) in the main plane of extension of the planar elements (2, 3) and/or in a direction perpendicular thereto.

13. The system according to any one of claims 1 to 12 wherein the well (4) of the device for handling liquid samples (1) is a channel.

14. The system according to any one of claims 1 to 13 wherein the mouth (5) of the device for handling liquid samples (1) is disposed at one end of the well (4) and the passage (16) is disposed at the other end of the well (4).

15. The system according to claim 13 or 14 wherein the channel substantially extends in the longitudinal direction of the device for handling liquid samples (1).

16. The system according to any one of claims 13 to 15 wherein the channel of the device for handling liquid samples (1) is of a meander shape or a spiral shape.

17. The system according to any one of claims 1 to 16 wherein the well (4) of the device for handling liquid samples (1), at its end opposed to the mouth (5), is connected to a secondary well (8), which is smaller than the well (4), via a channel having a cross-section which is smaller than that of the well (4).

18. The system according to any one of claims 1 to 17 wherein the well (4) of the device for handling liquid samples (1) is tapered towards the mouth (5) in a nozzle-like manner and/or is expanded in a diffusor-like manner.

19. The system according to any one of claims 1 to 18 wherein the mouth (5) of the device for handling liquid samples (1) comprises a plurality of mouth channels which are oriented in parallel or towards a common centre or are divergent.

20. The system according to any one of claims 1 to 19 wherein the device for handling liquid samples (1), in the vicinity of the mouth (5), has at least one step (35) and/or at least one guide element in order to be supported and/or guided on a reference object.

21. The system according to any one of claims 1 to 20 wherein the device for handling liquid samples (1), outside around the border of the passage (16), has a sealing surface to sealingly connect a displacement device (21) there.

22. The system according to any one of claims 1 to 21 wherein the well (4) of the device for handling liquid samples (1) has a plurality of reception chambers (4^{Iv}) which are connected to each other by connection channels (33).

23. The system according to any one of claims 1 to 22 wherein at least one planar element (2, 3) of the device for handling liquid samples (1) has a surface adjacent to the well (4) that is chemically modified and/or is structured.

24. The system according to any one of claims 1 to 23 wherein the device for handling liquid samples (1) has at least one additional functional element which is a membrane (17) and/or a nonwoven fabric and/or a filtration element and/or an optical window and/or an electrode and/or a surface-enlarging and/or turbulence-promoting and/or shear force-producing structure and/or is a positioning element and/or a catch member and/or a code (14).

25. The system according to claim 24 wherein the membrane (17) and/or the nonwoven fabric and/or the filtration element of the device for handling liquid samples (1) is disposed between two planar elements (2, 3) between a well (4) and a passage (16) and/or at least two wells (4) and/or one well (4) and a mouth (5) of the various planar elements (2, 3).

26. The system according to claim 25 wherein a planar element (2) of the device for handling liquid samples (1) has at least one indentation (18) in which the membrane (17) and/or the nonwoven fabric and/or the filtration element are placed so that it/they forms/form a plane, which is completely covered by another planar element (3), with the adjacent area of the planar element (2).

27. The system according to any one of claims 24 to 26 wherein the well (4^{V}) for a sample liquid of the device for handling liquid samples (1), in a planar element, have associated therewith a well (36) for a dialytic liquid in a further planar element and the two wells (4^{V}, 36) are separated by a dialytic membrane (36') disposed between the planar elements.

28. The system according to claim 27 wherein the well (36) of the device for handling liquid samples (1) for a dialytic liquid has at least one aperture (37, 38) to pass a dialytic liquid therethrough.

29. The system according to any one of claims 24 to 28 wherein the code (14) and/or the positioning element and/or the catch element, at an outside of the device for handling liquid samples (1), are disposed at a spacing from the mouth (5).

30. The system according to any one of claims 1 to 29 wherein at least one planar element (2, 3) of the device for handling liquid samples (1) is permeable to radiation for an optical measurement.

31. The system according to any one of claims 1 to 30 wherein the device for handling liquid samples (1) has at least one light beam-conducting element for an optical measurement.

32. The system according to any one of claims 1 to 31 wherein the mouth (5) and/or the passage (16) and/or the aperture (37, 38) of the device for handling liquid samples (1) have associated therewith at least one closure which can be optionally closed.

33. The system according to any one of claims 1 to 32 having a plurality of juxtaposed and interconnected devices for handling liquid samples (1).

34. The system according to claim 33 wherein the plurality of juxtaposed and interconnected devices of the device for handling liquid samples (1) are formed from common planar elements (2, 3).

35. The system according to any one of claims 1 to 34 comprising a plurality of superposed devices for handling liquid samples (1).

36. The system according to claim 35 wherein the superposed devices for handling liquid samples (1) are connected to each other.

37. The system according to any one of claims 33 to 36 wherein the device for handling liquid samples (1) is adapted to be disassembled into at least two smaller devices for handling liquid samples (1) along at least one break line disposed between two wells.

38. The system according to any one of claims 1 to 37 wherein the displacement device (21) or the actuation device and the device for mounting are fixedly connected to each other.

39. The system according to any one of claims 1 and 3 to 38 wherein the displacement device (21) has at least one piston cylinder device (24, 25).

40. The system according to any one of claims 1 and 3 to 39 wherein the displacement device (21) has a pump and a valve device to connect or disconnect the suction end in the pump to or from the device for handling liquid samples (1).

41. The system according to claim 40 which has a chamber for a positive and/or negative pressure which is connected to the pump and is adapted to be connected to the device for handling liquid samples via the valve device.

42. The system according to any one of claims 1 to 41 wherein the displacement device (21) or the actuation device initiates one or more pressure fluctuations in the well (4) in a mixed mode of operation in order to thoroughly mix a liquid sample in the well (4).

43. The system according to any one of claims 1 to 42 wherein the device for releasably mounting is a plug-in well into which a device for handling liquid samples (1) is adapted to be lockingly plugged in with a plug-in end.

44. The system according to any one of claims 1 and 3 to 43 wherein the device for releasably mounting has associated therewith a pressure spring (23) which presses a plugged-in device for handling liquid samples (1) against the line (20) or the actuation device.

45. The system according to any one of claims 1 and 3 to 44 wherein the line (20) has associated therewith an O-type sealing ring (22) for sealingly bearing on the outer edge of the passage (16) of the device for handling liquid samples (1).

46. The system according to any one of claims 1 to 45 wherein the device for releasably mounting helps in mounting at least two devices for handling liquid samples (1) in such a way that the wells (4) thereof are sealingly connected to each other via the passage (16) and/or the mouth (5) and the passage (16) or the limitation wall of one device for handling liquid samples (1) is connected to the displacement device (21) or is coupled to the actuation device in order to receive a sample liquid in a device for handling liquid samples (1) from outside and/or to deliver it to the outside and/or to transfer it between at least two devices for handling liquid samples.

47. The system for handling liquid samples according to any one of claims 1 to 46 comprising a handling apparatus with a centrifuge rotor (27) which has the device for releasably mounting at least one device for handling liquid samples (1).

48. The system according to claim 47 wherein the device for releasably mounting is a well (28) for positively receiving a device for handling liquid samples (1).

49. The system according to claim 47 or 48 wherein the well has recessed grips (29) for laterally gripping the device for handling (1) and/or has locking elements for laterally locking the device for handling liquid samples (1) in place and/or has sealing elements for sealing the apertures of the device for handling (1).

50. The system according to any one of claims 47 to 49 which has a device for releasably mounting at least two devices for handling liquid samples (1) which is such that the wells (4) thereof are sealingly connected to each other via the passage (16) and/or the mouth (5) in order to transfer sample liquid between the devices for handling liquid samples (1) during centrifuging.

51. A system for handling liquid samples according to any one of claims 1 to 50 including a handling apparatus with a heating device and a support associated therewith for storing at least one device for handling liquid samples (1) so that a liquid sample received therefrom is adapted to be heated by means of the heating device.

52. The system according to claim 51 wherein the heating device has a contact surface which comes into a surface contact with a planar element (2,3) of the device for handling liquid samples (1) if a device for handling liquid samples (1) is stored on the support.

53. A system for handling liquid samples according to any one of claims 1 to 52 including a handling apparatus with an optical measuring device and a device for releasably mounting at least one device for handling liquid samples (1) so that the latter, if arranged in the device for releasably mounting, is disposed with its well (4) in the path of beams of the optical measuring device.

54. The system according to any one of claims 1 to 53 wherein the elements of one or more handling apparatuses are disposed in or on at least one chassis and/or casing.

55. The system according to claim 54 wherein a plurality of handling apparatuses have one or more common elements.

56. The system according to any one of claims 1 to 55 wherein the at least one handling apparatus is manually operable and/or works automatically and/or is an apparatus that can be held by hand (a hand-operated apparatus).

57. The system according to any one of claims 1 to 56 wherein at least two handling apparatuses interact automatically.

58. The system according to any one of claims 1 to 57 wherein at least one further handling device exists for transporting devices for handling liquid samples (1) between various handling apparatuses and/or at least one handling apparatus and an input station and/or an output station and/or for supporting the handling apparatuses during their operation.

59. A process for the manufacture of a device for handling liquid samples (1) of a system according to any one of claims 1 to 58 wherein
- the surfaces of the planar elements (2, 3) are structured,
- a plurality of planar elements (2, 3) are brought into a relationship covering each other,
- are connected to each other, and
- wherein the interconnected planar elements (2, 3) are broken up into individual devices for handling liquid samples (1) in a direction perpendicular to the plane of main extension of the planar elements, wherein the individual device comprises a single proportioning disposable (1') or a multiplicity of parallel proportioning disposables (1') for the handling of microtitration plates.

60. The process according to claim 59 wherein at least one planar element (2, 3) is subjected to a surface treatment prior to being connected to at least one further planar element (2, 3).

## Revendications

1. Système de manipulation d'échantillons de liquide comprenant :
- au moins un dispositif pour la manipulation d'échantillons de liquide (1) avec au moins deux éléments planaires (2, 3) stratifiés l'un au-dessus de l'autre et assemblés l'un avec l'autre, entre lesquels un logement (4) est constitué pour un échantillon de liquide, qui s'étend entre une embouchure (5) conduisant vers l'extérieur pour recevoir et distribuer un échantillon de liquide et un passage (16) conduisant vers l'extérieur pour raccorder le logement (4) à un dispositif de déplacement (21) pour de l'air ou un autre gaz, le dispositif pour la manipulation d'échantillons de liquide (1) présentant dans la zone de l'embouchure (5) un appointissage pour l'introduction dans des récipients étroits, et
- un appareil de manipulation avec le dispositif de déplacement (21), un dispositif pour la fixation détachable du au moins un dispositif pour la manipulation des échantillons de liquide (1) et une conduite (20) reliant de manière étanche le dispositif de déplacement (21) au passage (16), lorsque le dispositif pour la manipulation d'échantillons de liquide (1) est disposé dans le dispositif pour la fixation détachable pour aspirer et rejeter des échantillons de liquide à travers l'embouchure (5) à l'aide du dispositif de déplacement (21).

2. Système de manipulation d'échantillons de liquide comprenant :
- au moins un dispositif pour la manipulation d'échantillons de liquide (1), avec au moins deux éléments planaires (2, 3) stratifiés l'un au-dessus de l'autre et assemblés l'un avec l'autre, entre lesquels un logement (4) pour un échantillon de liquide est constitué, qui est raccordé à une embouchure (5) conduisant vers l'extérieur pour recevoir et distribuer des échantillons de liquide et présente une paroi de délimitation déplaçable pour déplacer un fluide contenu dans le logement (4), qui peut être raccordée pour le déplacement à un dispositif d'actionnement externe, le dispositif pour la manipulation d'échantillons de liquide (1) présentant dans la zone de l'embouchure (5) un appointissage pour l'introduction dans des récipients étroits,
- et un appareil de manipulation avec le dispositif d'actionnement et un dispositif affecté à celui-ci pour la fixation détachable du au moins un dispositif pour la manipulation d'échantillons de liquide, le dispositif d'actionnement étant couplé avec la paroi de délimitation déplaçable du dispositif pour la manipulation d'échantillons de liquide (1), lorsque ce dernier est disposé dans le dispositif pour la fixation détachable pour aspirer et rejeter des échantillons de liquide (1) à travers l'embouchure (5) à l'aide du dispositif d'actionnement.

3. Système selon la revendication 1 ou 2, dans lequel les éléments planaires (2, 3) et/ou la paroi de délimitation du dispositif pour la manipulation d'échantillons de liquide (1) sont des plaquettes et/ou des films et/ou des membranes.

4. Système selon l'une des revendications 1 à 3, dans lequel les éléments planaires (2, 3) du dispositif pour la manipulation d'échantillons de liquide (1) sont en matière plastique et/ou en verre et/ou en matière semi-conductrice et/ou en métal.

5. Système selon l'une des revendications 1 à 4, dans lequel le logement (4) du dispositif pour la manipulation d'échantillons de liquide (1) comprend un enfoncement dans une face d'un élément planaire (2) qui est recouvert par un autre élément planaire (3), et/ou dans lequel le logement (4) comprend des enfoncements dans des faces se faisant face de deux éléments planaires (2, 3) placés l'un sur l'autre et/ou dans lequel le logement (4) comprend une brèche dans un élément planaire (2, 3) qui est recouverte des deux côtés par des éléments planaires (2, 3).

6. Système selon la revendication 5, dans lequel un élément planaire (2) du dispositif pour la manipulation d'échantillons de liquide (1) est une plaquette avec un logement constitué sur une face en tant qu'enfoncement et un autre élément planaire (3) est un film qui recouvre la plaquette sur la face du logement (4).

7. Système selon l'une des revendications 1 à 6, dans lequel l'embouchure (5) du dispositif pour la manipulation d'échantillons de liquide (1) est étendue vers l'extérieur dans une première zone de bord des éléments planaires (2, 3) assemblés les uns avec les autres entre les éléments planaires (2, 3) assemblés les uns avec les autres ou est étendue vers l'extérieur transversalement à travers l'un des éléments planaires (2, 3) assemblés les uns avec les autres.

8. Système selon l'une des revendications 1 à 7, dans lequel le passage (16) du dispositif pour la manipulation d'échantillons de liquide (1) est étendu vers l'extérieur transversalement à travers l'un des éléments planaires (2, 3) assemblés les uns avec les autres ou est étendu vers l'extérieur dans une seconde zone de bord des éléments planaires (2, 3) assemblés les uns avec les autres entre les éléments planaires (2, 3) assemblés les uns avec les autres.

9. Système selon la revendication 7 ou 8, dans lequel l'embouchure (5) du dispositif pour la manipulation d'échantillons de liquide (1) est étendue vers l'extérieur entre une plaquette et un film et/ou le passage (16) est étendu vers l'extérieur transversalement à travers un film recouvrant une plaquette.

10. Système selon l'une des revendications 7 à 9, dans lequel l'embouchure (5) du dispositif pour la manipulation d'échantillons de liquide (1) est disposée dans une première zone de bord ou à proximité de celle-ci et le passage (16) est disposé à proximité d'une seconde zone de bord éloignée de la première zone de bord ou dans cette seconde zone de bord.

11. Système selon l'une des revendications 1 à 10, dans lequel le dispositif pour la manipulation d'échantillons de liquide (1) est essentiellement en forme de languette et présente l'embouchure (5) dans une première face terminale et le passage (16) dans une face longitudinale.

12. Système selon la revendication 11, dans lequel le dispositif pour la manipulation d'échantillons de liquide (1) rétrécit dans le plan d'étendue principal des éléments planaires (2, 3) et/ou perpendiculairement à celui-ci vers l'embouchure (5).

13. Système selon l'une des revendications 1 à 12, dans lequel le logement (4) du dispositif pour la manipulation d'échantillons liquide (1) est un canal.

14. Système selon l'une des revendications 1 à 13, dans lequel l'embouchure (5) du dispositif pour la manipulation d'échantillons de liquide (1) est disposée à une extrémité du logement (4) et le passage (16) à l'autre extrémité du logement (4).

15. Système selon la revendication 13 ou 14, dans lequel le canal s'étend essentiellement dans le sens longitudinal du dispositif pour la manipulation d'échantillons de liquide (1).

16. Système selon l'une des revendications 13 à 15, dans lequel le canal du dispositif pour la manipulation d'échantillons de liquide (1) est de forme sinueuse ou de forme hélicoïdale.

17. Système selon l'une des revendications 1 à 16, dans lequel le logement (4) du dispositif pour la manipulation d'échantillons de liquide (1) est relié, à son extrémité opposée à l'embouchure (5), par un canal qui présente un diamètre inférieur au logement (4), à un logement secondaire (8) qui est plus petit que le logement (4).

18. Système selon l'une des revendications 1 à 17, dans lequel le logement (4) du dispositif pour la manipulation d'échantillons de liquide (1) rétrécit à la manière d'un injecteur et/ou s'élargit à la manière d'un diffuseur vers l'embouchure (5).

19. Système selon l'une des revendications 1 à 18, dans lequel l'embouchure (5) du dispositif pour la manipulation d'échantillons de liquide (1) comprend plusieurs canaux d'embouchure qui sont orientés parallèlement ou de manière divergente vers un centre commun.

20. Système selon l'une des revendications 1 à 19, dans lequel le dispositif pour la manipulation d'échantillons de liquide (1) a à proximité de l'embouchure (5) au moins un gradin (35) et/ou au moins un élément de guidage pour l'appui et/ou le guidage sur un objet de référence.

21. Système selon l'une des revendications 1 à 20, dans lequel le dispositif pour la manipulation d'échantillons de liquide (1) a à l'extérieur autour du bord du passage (16) une face d'étanchéité pour le raccordement étanche d'un dispositif de déplacement (21).

22. Système selon l'une des revendications 1 à 21, dans lequel le logement (4) du dispositif pour la manipulation d'échantillons de liquide (1) a plusieurs chambres de logement (4^{Iv}) qui sont reliées les unes aux autres par des canaux de liaison (33).

23. Système selon l'une des revendications 1 à 22, dans lequel au moins un élément planaire (2, 3) du dispositif pour la manipulation d'échantillons de liquide (1) présente dans la zone du logement (4) une surface modifiée chimiquement et/ou structurée.

24. Système selon l'une des revendications 1 à 23, dans lequel le dispositif pour la manipulation d'échantillons de liquide (1) présente au moins un élément fonctionnel supplémentaire qui est une membrane (17) et/ou un non-tissé et/ou un élément de filtre et/ou une fenêtre optique et/ou une électrode et/ou une structure agrandissant la surface et/ou favorisant les turbulences et/ou générant une force de cisaillement et/ou un élément de positionnement et/ou un indexeur et/ou un codage (14).

25. Système selon la revendication 24, dans lequel la membrane (17) et/ou le non-tissé et/ou l'élément de filtre du dispositif pour la manipulation d'échantillons de liquide (1) est disposé(e) entre deux éléments planaires (2, 3) entre un logement (4) et un passage (16) et/ou au moins deux logements (4) et/ou un logement (4) et une embouchure (5) des différents éléments planaires (2, 3).

26. Système selon la revendication 25, dans lequel un élément planaire (2) du dispositif pour la manipulation d'échantillons de liquide (1) a au moins un enfoncement (18) dans lequel la membrane (17) et/ou le non-tissé et/ou l'élément de filtre est placé(e) de sorte que celle-ci/celui-ci forme un plan avec la zone adjacente de l'élément planaire (2), qui est complètement recouvert par un autre élément planaire (3).

27. Système selon l'une des revendications 24 à 26, dans lequel est affecté au logement (4^{V}) pour du liquide d'échantillon du dispositif pour la manipulation d'échantillons de liquide (1) dans un élément planaire un logement (36) pour du fluide dialyseur dans un autre élément planaire et les deux logements (4^{V}, 36) sont séparés par une membrane de dialyse (36') disposée entre les éléments planaires.

28. Système selon la revendication 27, dans lequel le logement (36) du dispositif pour la manipulation d'échantillons de liquide (1) pour du fluide dialyseur a au moins une ouverture (37, 38) pour le passage de fluide dialyseur.

29. Système selon l'une des revendications 24 à 28, dans lequel le codage (14) et/ou l'élément de positionnement et/ou l'indexeur est disposé sur une face extérieure du dispositif pour la manipulation d'échantillons de liquide (1) à l'écart de l'embouchure (5).

30. Système selon l'une des revendications 1 à 29, dans lequel au moins un élément planaire (2, 3) du dispositif pour la manipulation d'échantillons de liquide (1) est perméable aux rayonnements pour une mesure optique.

31. Système selon l'une des revendications 1 à 30, dans lequel le dispositif pour la manipulation d'échantillons de liquide (1) présente au moins un élément de guidage de faisceau lumineux pour une mesure optique.

32. Système selon l'une des revendications 1 à 31, dans lequel est affecté à l'embouchure (5) et/ou au passage (16) et/ou à l'ouverture (37, 38) du dispositif pour la manipulation d'échantillons de liquide (1) au moins un verrouillage pour verrouiller de manière facultative.

33. Système selon l'une des revendications 1 à 32 avec plusieurs dispositifs pour la manipulation d'échantillons de liquide (1) disposés les uns à côté des autres et raccordés les uns aux autres.

34. Système selon la revendication 33, dans lequel les plusieurs dispositifs disposés les uns à côté des autres du dispositif pour la manipulation d'échantillons de liquide (1) sont formés à partir d'éléments planaires (2, 3) communs.

35. Système selon l'une des revendications 1 à 34 avec plusieurs dispositifs pour la manipulation d'échantillons de liquide (1) disposés les uns au-dessus des autres.

36. Système selon la revendication 35, dans lequel les dispositifs pour la manipulation d'échantillons de liquide (1) disposés les uns au-dessus des autres sont raccordés les uns aux autres.

37. Système selon l'une des revendications 33 à 36, dans lequel le dispositif pour la manipulation d'échantillons de liquide (1) peut être subdivisé le long d'au moins une ligne de rupture disposée entre deux logements en au moins deux dispositifs pour la manipulation d'échantillons de liquide (1) plus petits.

38. Système selon l'une des revendications 1 à 37, dans lequel le dispositif de déplacement (21) ou le dispositif d'actionnement et le dispositif de fixation sont assemblés de manière fixe les uns avec les autres.

39. Système selon l'une des revendications 1 et 3 à 38, dans lequel le dispositif de déplacement (21) présente au moins un dispositif piston-cylindre (24, 25).

40. Système selon l'une des revendications 1 et 3 à 39, dans lequel le dispositif de déplacement (21) a une pompe et un dispositif de valve pour raccorder et/ou séparer le côté aspiration dans la pompe au ou du dispositif pour la manipulation d'échantillons de liquide (1).

41. Système selon la revendication 40, qui présente une chambre pour la surpression et/ou la dépression qui est raccordée à la pompe et peut être raccordée par le dispositif de valve au dispositif pour la manipulation d'échantillons de liquide.

42. Système selon l'une des revendications 1 à 41, dans lequel le dispositif de déplacement (21) ou le dispositif d'actionnement provoque, dans une opération de mélange dans le but de mélanger un échantillon de liquide dans le logement (4), une ou plusieurs fluctuations de pression dans le logement (4).

43. Système selon l'une des revendications 1 à 42, dans lequel le dispositif pour la fixation détachable est un logement d'emboîtement dans lequel un dispositif pour la manipulation d'échantillons de liquide (1) avec une extrémité d'emboîtement peut être emboîté par serrage.

44. Système selon l'une des revendications 1 et 3 à 43, dans lequel est affecté au dispositif pour la fixation détachable un ressort de pression (23) qui presse un dispositif pour la manipulation d'échantillons de liquide (1) emboîté contre la conduite (20) ou le dispositif d'actionnement.

45. Système selon l'une des revendications 1 et 3 à 44, dans lequel est affecté à la conduite (20) un joint torique (22) pour l'appui étanche sur le bord extérieur du passage (16) du dispositif pour la manipulation d'échantillons de liquide (1).

46. Système selon l'une des revendications 1 à 45, dans lequel au moins deux dispositifs pour la manipulation d'échantillons de liquide (1) peuvent être fixés à l'aide du dispositif pour la fixation détachable de manière à ce que leurs logements (4) soient raccordés les uns aux autres de manière étanche par le passage (16) et/ou l'embouchure (5) et le passage (16) ou la paroi de délimitation d'un dispositif pour la manipulation d'échantillons de liquide (1) est raccordée au dispositif de déplacement (21) ou couplée au dispositif d'accouplement pour recevoir du liquide d'échantillon de l'extérieur dans un dispositif pour la manipulation d'échantillons de liquide (1) et/ou le distribuer vers l'extérieur et/ou le transmettre entre au moins deux dispositifs pour la manipulation d'échantillons de liquide.

47. Système de manipulation d'échantillons de liquide selon l'une des revendications 1 à 46, avec un appareil de manipulation avec un rotor de centrifugeuse (27) qui présente le dispositif pour la fixation détachable d'au moins un dispositif pour la manipulation d'échantillons de liquide (1).

48. Système selon la revendication 47, dans lequel le dispositif pour la fixation détachable est un logement (28) pour le logement par retenue mécanique d'un dispositif pour la manipulation d'échantillons de liquide (1).

49. Système selon la revendication 47 ou 48, dans lequel le logement présente des poignées creuses (29) pour l'engrènement latéral du dispositif pour la manipulation (1) et/ou des éléments de serrage pour le blocage latéral du dispositif pour la manipulation d'échantillons de liquide (1) et/ou des éléments d'étanchéité pour rendre étanche des ouvertures du dispositif pour la manipulation (1).

50. Système selon l'une des revendications 47 à 49 qui a un dispositif pour la fixation détachable d'au moins deux dispositifs pour la manipulation d'échantillons de liquide (1) constitué de telle manière que leurs logements (4) sont raccordés les uns aux autres de manière étanche par le passage (16) et/ou l'embouchure (5) pour transmettre du liquide d'échantillon entre les dispositifs pour la manipulation d'échantillons de liquide (1) lors de la centrifugation.

51. Système de manipulation d'échantillons de liquide selon l'une des revendications 1 à 50 avec un appareil de manipulation avec un dispositif de chauffage et un palier affecté à celui-ci pour le logement au moins d'un dispositif pour la manipulation d'échantillons de liquide (1) de sorte qu'un échantillon de liquide reçu dans le logement peut être chauffé à l'aide du dispositif de chauffage.

52. Système selon la revendication 51, dans lequel le dispositif de chauffage présente une surface de contact qui, lors du logement d'un dispositif pour la manipulation d'échantillons de liquide (1) sur le palier, vient en contact de surface avec un élément planaire (2, 3) du dispositif pour la manipulation d'échantillons de liquide (1).

53. Système de manipulation d'échantillons de liquide selon l'une des revendications 1 à 52, avec un appareil de manipulation avec un dispositif de mesure optique et un dispositif pour la fixation détachable au moins d'un dispositif pour la manipulation d'échantillons de liquide (1) de sorte que ce dernier, lors de la disposition dans le dispositif pour la fixation détachable, est disposé avec son logement (4) dans la trajectoire du faisceau du dispositif de mesure optique.

54. Système selon l'une des revendications 1 à 53, dans lequel les éléments d'un ou de plusieurs appareils de manipulation sont disposés dans ou sur au moins un châssis et/ou boîtier.

55. Système selon la revendication 54, dans lequel plusieurs appareils de manipulation ont un ou plusieurs éléments communs.

56. Système selon l'une des revendications 1 à 55, dans lequel le au moins un appareil de manipulation peut être actionné manuellement et/ou fonctionne automatiquement et/ou est un appareil pouvant être pris dans la main pour l'application (appareil portable).

57. Système selon l'une des revendications 1 à 56, dans lequel au moins deux appareils de manipulation coopèrent automatiquement.

58. Système selon l'une des revendications 1 à 57, dans lequel se trouve au moins un autre dispositif de manipulation pour transporter des dispositifs pour la manipulation d'échantillons de liquide (1) entre différents appareils de manipulation et/ou au moins un appareil de manipulation et une station d'alimentation et/ou une station de distribution et/ou pour le soutien des appareils de manipulation dans leur fonction.

59. Procédé de production d'un dispositif pour la manipulation d'échantillons de liquide (1) d'un système selon l'une des revendications 1 à 58, dans lequel
- les surfaces des éléments planaires (2, 3) sont structurées,
- plusieurs éléments planaires (2, 3) sont amenés en relation se recouvrant les uns les autres
- sont assemblés les uns avec les autres et
- dans lequel les éléments planaires (2, 3) assemblés sont subdivisés perpendiculairement au plan d'étendue principal des éléments planaires en des dispositifs particuliers pour la manipulation d'échantillons de liquide (1), le dispositif particulier comprenant un unique article de dosage à usage unique (1') ou plusieurs articles de dosage à usage unique (1') parallèles pour le traitement de plaques de microtitration.

60. Procédé selon la revendication 59, dans lequel au moins un élément planaire (2, 3) est soumis à un traitement de surface avant l'assemblage avec au moins un autre élément planaire (2, 3).
